# EUROPEAN PATENT APPLICATION

(11) **EP 4 845 080 A1**
(43) Date of publication of application: **25.11.2026**
(21) Application number: 25745338.1
(22) Date of filing: 23.01.2025
(51) Int. Cl.: H04L 5/00, H04L 5/14, H04W 72/23, H04B 7/0413

(54) **METHOD AND APPARATUS FOR TRANSMISSION OF FULL-DUPLEX SYSTEM IN WIRELESS COMMUNICATION SYSTEM**

(30) Priority: 25.01.2024 KR 20240011624
(71) Applicant: Samsung Electronics Co., Ltd., Suwon-si, Gyeonggi-do 16677 (KR)
(72) Inventor: CHOI, Kyungjun, Suwon-si Gyeonggi-do 16677 (KR); LIM, Seongmok, Suwon-si Gyeonggi-do 16677 (KR); JANG, Youngrok, Suwon-si Gyeonggi-do 16677 (KR); KIM, Younsun, Suwon-si Gyeonggi-do 16677 (KR); SHIM, Jaeyeon, Suwon-si Gyeonggi-do 16677 (KR); JI, Hyoungju, Suwon-si Gyeonggi-do 16677 (KR)
(74) Representative: Gulde & Partner
(86) International application number: PCT/KR2025/001283
(87) International publication number: WO 2025/159514

(57) **Abstract**

The present disclosure provides a random access method in a wireless communication system. According to various embodiments of the present disclosure, the method performed by a user equipment (UE) in a wireless communication system may comprise the steps of: receiving, from a base station, first information configuring a resource for a first symbol and second information configuring a resource for a second symbol; receiving, from the base station, first downlink control information (DCI) including a first sounding reference signal resource indicator (SRI) for the first symbol and/or a second SRI for the second symbol; and transmitting, to the base station, a physical uplink shared channel (PUSCH) on the first symbol and/or the second symbol, wherein the first SRI is associated with a first SRS resource before receiving the first DCI, and a symbol type of the first symbol is the same as a symbol type of the first SRS resource, and the second SRI is associated with a second SRS resource before receiving the first DCI, and a symbol type of the second symbol is the same as a symbol type of the second SRS resource.

## Description

### Technical Field

The disclosure generally relates to a wireless communication system and, more specifically, to a method and an apparatus for multiple-input and multiple-output (MIMO) transmission of a terminal supporting full duplex (FD) communication in a wireless communication system.

### Background Art

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multibeam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial- based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

As described above, with the development of wireless communication systems, it has become possible to provide various services, and thus there is a demand for methods for smoothly providing such services.

### Disclosure of Invention

### Technical Problem

Based on the discussion as described above, the disclosure is to provide an apparatus and a method for multiple-input and multiple-output (MIMO) transmission of a terminal supporting subband full duplex (SBFD) communication in a wireless communication system.

### Solution to Problem

According to various embodiments of the disclosure, a method performed by user equipment in a wireless communication system may include: receiving first information for configuring a resource for a first symbol and second information for configuring a resource for a second symbol from a base station; receiving first downlink control information (DCI) including at least one of a first sounding reference signal resource indicator (SRI) for the first symbol or a second SRI for the second symbol from the base station; and transmitting a physical uplink shared channel (PUSCH) to the base station on at least one of the first symbol or the second symbol, wherein the first SRI may be associated with a first SRS resource before receiving the first DCI, the symbol type of the first symbol may be identical to the symbol type of the first SRS resource, and wherein the second SRI may be associated with a second SRS resource before receiving the first DCI, and the symbol type of the second symbol may be identical to the symbol type of the second SRS resource.

According to various embodiments of the disclosure, a method performed by a base station in a wireless communication system may include: transmitting first information for configuring a resource for a first symbol and second information for configuring a resource for a second symbol to user equipment; transmitting first downlink control information (DCI) including at least one of a first sounding reference signal resource indicator (SRI) for the first symbol or a second SRI for the second symbol to the user equipment; and receiving a physical uplink shared channel (PUSCH) from the user equipment on at least one of the first symbol or the second symbol, wherein the first SRI may be associated with a first SRS resource before receiving the first DCI, the symbol type of the first symbol may be identical to the symbol type of the first SRS resource, and wherein the second SRI may be associated with a second SRS resource before receiving the first DCI, and the symbol type of the second symbol may be identical to the symbol type of the second SRS resource.

### Advantageous Effects of Invention

Through embodiments of the disclosure, an apparatus and a method capable of effectively providing services in a wireless communication system are provided.

Advantageous effects obtainable from the disclosure are not limited to those mentioned above, and other effects which are not mentioned herein may be clearly understood from the following description by those skilled in the art to which the disclosure pertains.

### Brief Description of Drawings

FIG. 1 illustrates a basic structure of a time-frequency domain in a wireless communication system according to an embodiment of the disclosure.
FIG. 2 illustrates a structure of a frame, a subframe, and a slot in a wireless communication system according to an embodiment of the disclosure.
FIG. 3 illustrates an example of a bandwidth part configuration in a wireless communication system according to an embodiment of the disclosure.
FIG. 4 illustrates an example of a control resource set configuration of a downlink (DL) control channel in a wireless communication system according to an embodiment of the disclosure.
FIG. 5 illustrates a structure of a downlink control channel in a wireless communication system according to an embodiment of the disclosure.
FIG. 6 illustrates an example of a method in which a base station and a UE transmit/receive data in consideration of a downlink data channel and a rate matching resource in a wireless communication system according to an embodiment of the disclosure.
FIG. 7 illustrates an example of frequency domain resource allocation with regard to a physical downlink shared channel (PDSCH) in a wireless communication system according to an embodiment of the disclosure.
FIG. 8 illustrates an example of time domain resource allocation with regard to a PDSCH in a wireless communication system according to an embodiment of the disclosure.
FIG. 9 illustrates an example of time domain resource allocation according to subcarrier spacings with regard to a data channel and a control channel in a wireless communication system according to an embodiment of the disclosure.
FIG. 10 illustrates radio protocol structures of a base station and a UE in single cell, carrier aggregation, and dual connectivity situations in a wireless communication system according to an embodiment of the disclosure.
FIG. 11 illustrates an example of a time division duplex (TDD) configuration and a subband full duplex (SBFD) configuration according to an embodiment of the disclosure.
FIG. 12 illustrates an example of an SBFD configuration according to an embodiment of the disclosure.
FIG. 13 illustrates an example of an antenna operation method in a TDD transmission scheme according to an embodiment of the disclosure.
FIG. 14 illustrates an example of an antenna operation method in an SBFD transmission scheme according to an embodiment of the disclosure.
FIG. 15 illustrates an example of multiple quasi co-located (QCL) assumptions in an SBFD transmission scheme according to an embodiment of the disclosure.
FIG. 16 illustrates an example of transmission according to a multiple-input and multiple-output (MIMO) parameter according to an embodiment of the disclosure.
FIG. 17 illustrates a structure of a UE in a wireless communication system according to an embodiment of the disclosure.
FIG. 18 illustrates a structure of a base station in a wireless communication system according to an embodiment of the disclosure.

### Mode for the Invention

Hereinafter, embodiments of the present disclosure will be described in detail with reference to the accompanying drawings.

In describing the embodiments, descriptions of technical contents that are well known in the technical field to which the present disclosure pertains and that are not directly related to the present disclosure will be omitted. This is to more clearly convey the gist of the present disclosure without obscuring the same by omitting unnecessary descriptions.

For the same reason, in the accompanying drawings, some components are exaggerated, omitted, or schematically illustrated. In addition, the size of each component does not entirely reflect an actual size. In each drawing, the same or corresponding components are assigned the same reference numerals.

The advantages and features of the present disclosure, and methods for achieving them, will become apparent with reference to the embodiments described below in detail together with the accompanying drawings. However, the present disclosure is not limited to the embodiments disclosed below, but may be implemented in various different forms, and the present embodiments are provided merely to make the disclosure of the present disclosure complete and to fully inform those of ordinary skill in the art to which the present disclosure pertains of the scope of the disclosure, and the present disclosure is defined only by the scope of the claims. Like reference numerals refer to like components throughout the specification. In addition, in describing the present disclosure, when it is determined that a detailed description of a related function or configuration may unnecessarily obscure the gist of the present disclosure, the detailed description thereof will be omitted. The terms described below are terms defined in consideration of functions in the present disclosure, and may vary depending on the intention or practice of a user or operator. Therefore, the definitions thereof should be made based on the contents throughout the present specification.

In the following, a base station is an entity that allocates resources to terminals, and may be at least one of a gNode B, an eNode B, a Node B, a base station (BS), a wireless access unit, a base station controller, or a node on a network. A terminal may include a user equipment (UE), a mobile station (MS), a cellular phone, a smartphone, a computer, or a multimedia system capable of performing communication functions. As used herein, a "downlink (DL)" refers to a radio link via which a base station transmits a signal to a terminal, and an "uplink (UL)" refers to a radio link via which a terminal transmits a signal to a base station. Furthermore, in the following, LTE or LTE-A systems may be described by way of example, but the embodiments of the disclosure may also be applied to other communication systems having similar technical backgrounds or channel types. Examples of such communication systems may include 5th generation mobile communication technologies (e.g., 5G new radio (NR)) developed beyond LTE-A, and in the following description, the "5G" may be the concept that covers the exiting LTE, LTE-A, and other similar services. Moreover, based on determinations by those skilled in the art, the disclosure may also be applied to other communication systems through some modifications without significantly departing from the scope of the disclosure.

At this time, it will be understood that each block of the process flowchart drawings and combinations of the blocks of the flowchart drawings may be performed by computer program instructions. Since these computer program instructions may be loaded onto a processor of a general-purpose computer, a special-purpose computer, or other programmable data processing equipment, the instructions performed through the processor of the computer or other programmable data processing equipment generate means for performing the functions described in the flowchart block(s). Since these computer program instructions may also be stored in a computer-usable or computer-readable memory that can direct a computer or other programmable data processing equipment to implement functions in a specific manner, the instructions stored in the computer-usable or computer-readable memory may also produce an article of manufacture containing instruction means for performing the functions described in the flowchart block(s). Since the computer program instructions may also be loaded onto a computer or other programmable data processing equipment, a series of operational steps may be performed on the computer or other programmable data processing equipment to generate a computer-executed process, so that the instructions performing the computer or other programmable data processing equipment may also provide steps for executing the functions described in the flowchart block(s).

In addition, each block may represent a module, segment, or portion of code including one or more executable instructions for executing specified logical function(s). It should also be noted that, in some alternative implementations, the functions mentioned in the blocks may occur out of order. For example, two blocks illustrated in succession may in fact be performed substantially simultaneously, or the blocks may sometimes be performed in a reverse order depending on the corresponding functions.

At this time, the term "~ unit" used in the present embodiment refers to software or a hardware component such as an FPGA (Field Programmable Gate Array) or an ASIC (Application Specific Integrated Circuit), and the "~ unit" performs certain roles. However, the "~ unit" is not limited to software or hardware. The "~ unit" may be configured to reside in an addressable storage medium, or may be configured to execute on one or more processors. Therefore, as an example, the "~ unit" includes components such as software components, object-oriented software components, class components, and task components, as well as processes, functions, attributes, procedures, subroutines, segments of program code, drivers, firmware, microcode, circuits, data, databases, data structures, tables, arrays, and variables. The functions provided within the components and the "~ units" may be combined into a smaller number of components and "~ units," or may be further separated into additional components and "~ units." In addition, the components and the "~ units" may be implemented to execute one or more CPUs in a device or a secure multimedia card. In addition, in an embodiment, the "~ unit" may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) (or eNode B), and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5 ms, and may also requires a packet error rate of 10⁻⁵ or less. Therefore, for the services supporting URLLC, the 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

According to various embodiments of the disclosure, various schemes for MIMO transmission in a subband full duplex (SBFD) system are described. According to various embodiments, the number of MIMO layers regarding downlink symbols of the UE may be different from the number of MIMO layers regarding SBFD symbols. Accordingly, different MIMO transmission modes need to be configured with respect to symbol types, and the UE may receive a physical downlink shared channel (PDSCH) or transmit a physical uplink shared channel (PUSCH), based on symbol-specific MIMO configurations.

### [NR time-frequency resources]

Hereinafter, a frame structure of a 5G system will be described in more detail with reference to the accompanying drawings.

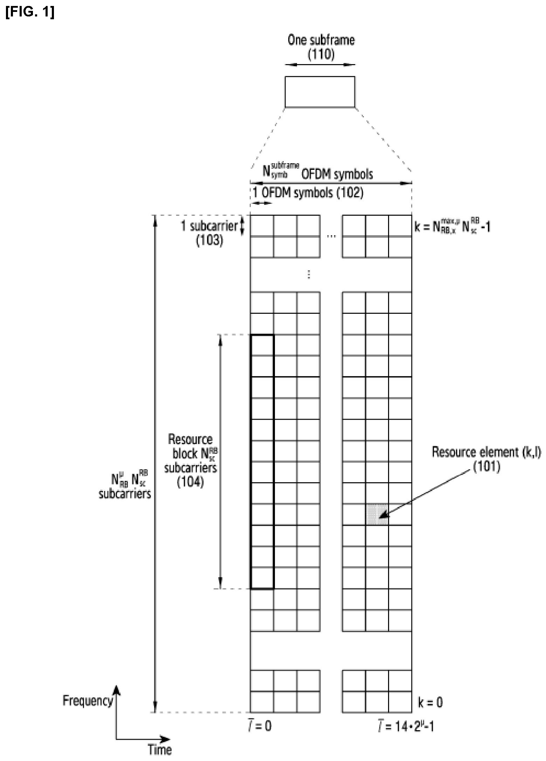

FIG. 1 illustrates a basic structure of a time-frequency domain in a wireless communication system according to an embodiment of the disclosure. More specifically, FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time-frequency domain is a resource element (RE) 101, which may be defined as one orthogonal frequency division multiplexing (OFDM) symbol 102 on the time axis and one subcarrier 103 on the frequency axis. In the frequency domain, ${N}_{SC}^{RB}$ (for example, 12) consecutive REs may constitute one resource block (RB) 104.

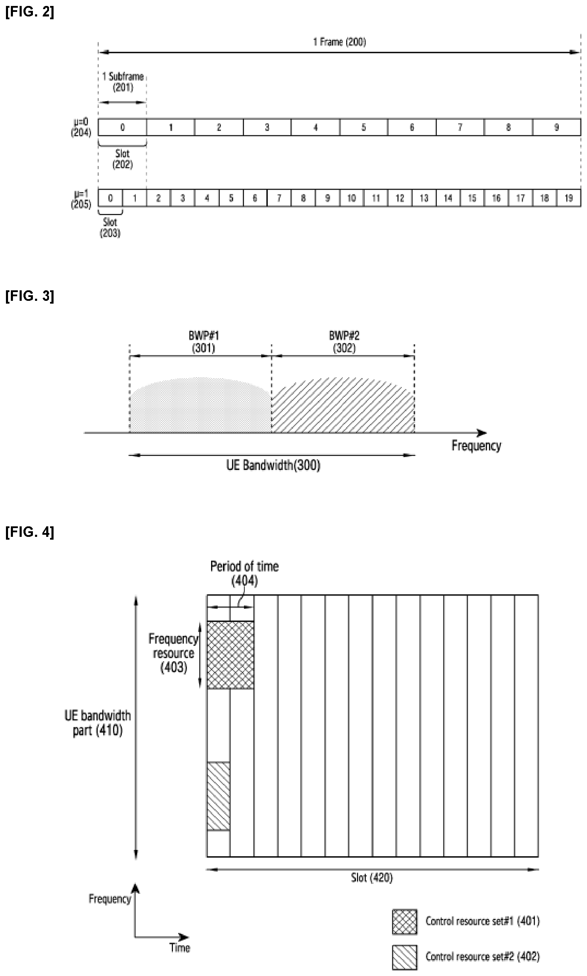

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot ${N}_{symb}^{slot} = 14$). One subframe 201 may include one or multiple slots 202 and 203, and the number of slots 202 and 203 per one subframe 201 may vary depending on configuration values µ for the subcarrier spacing 204 or 205.

Referring to FIG. 2, FIG. 2 illustrates a case in which the subcarrier spacing configuration value is µ=0 (204), and a case in which µ=1 (205). In the case of µ=0 (204), one subframe 201 may include one slot 202, and in the case of µ=1 (205), one subframe 201 may include two slots 203. That is, the number of slots per one subframe ${N}_{slot}^{subframe , μ}$ may differ depending on the subcarrier spacing configuration value µ, and the number of slots per one frame ${N}_{slot}^{frame , μ}$ may differ accordingly. ${N}_{slot}^{subframe , μ}$ and ${N}_{slot}^{frame , μ}$ may be defined according to each subcarrier spacing configuration µ as in Table 1 below.

**[Table 1]**

| µ | ${N}_{symb}^{slot}$ | ${N}_{slot}^{frame , μ}$ | ${N}_{slot}^{subframe , μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

### [Bandwidth part (BWP)]

Next, a bandwidth part (BWP) configuration in a 5G communication system will be described in detail with reference to the accompanying drawings.

FIG. 3 illustrates an example of a bandwidth part configuration in a wireless communication system according to an embodiment of the disclosure.

FIG. 3 shows an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

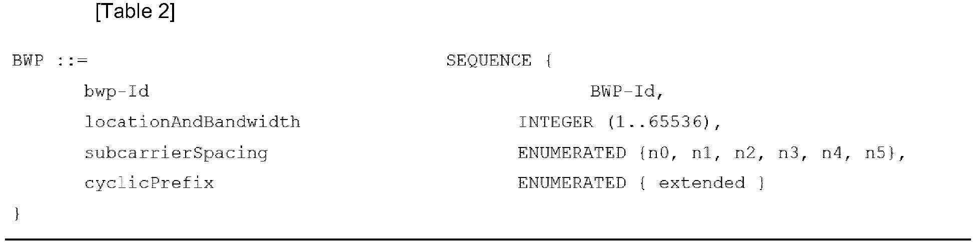

Of course, the configuration information is not limited to the above example, and in addition to the above-mentioned configuration information, various parameters related to the bandwidth part may be configured for the UE. The base station may transfer the configuration information to the UE through upper layer signaling, for example, radio resource control (RRC) signaling. One configured bandwidth part or at least one bandwidth part among multiple configured bandwidth parts may be activated. Whether or not a configured bandwidth part is activated may be transferred from the base station to the UE semi-statically through RRC signaling, or dynamically through downlink control information (DCI).

According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured via the MIB may be considered identity (ID) 0. The base station may notify the UE of configuration information, such as frequency allocation information, time allocation information, and numerology, regarding CORESET #0 through the MIB. In addition, the base station may notify the UE of configuration information regarding the monitoring periodicity and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The above-described bandwidth part- related configuration supported by the 5G system may be used for various purposes.

According to some embodiments, if the bandwidth supported by the UE is smaller than the system bandwidth, this may be supported through the bandwidth part configuration. For example, the base station may configure the frequency location (configuration information 2) of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth (for example, 100MHz), and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. To be more specific, a UE may have a control resource set (CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. In addition to receiving SIBs, the initial bandwidth part may also be used for other system information (OSI), paging, and random access.

### [Bandwidth part (BWP) change]

If a UE has one or more bandwidth parts configured therefor, the base station may indicate, to the UE, to change (or switch or transition) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI. The UE may change the bandwidth part to bandwidth part #2 302 indicated by the bandwidth part indicator inside received DCI.

As described above, DCI-based bandwidth part changing may be indicated by DCI for scheduling a PDSCH or a PUSCH. Therefore, upon receiving a bandwidth part change request, the UE needs to be able to receive or transmit the PDSCH or PUSCH scheduled by the corresponding DCI, in the changed bandwidth part with no problem. To this end, requirements for the delay time (T_{BWP}) required during a bandwidth part change are specified in standards, and may be defined given in Table 3 below, for example.

**[Table 3]**

| *µ* | **NR Slot length (ms)** | **BWP switch delay T_{BWP} (slots)** | |
|---|---|---|---|
| | | **Type 1^{Note 1}** | **Type 2^{Note 1}** |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirements for the bandwidth part change delay time support type 1 or type 2, depending on the capability of the UE. The UE may report the supportable bandwidth part change delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a time point not later than slot n+T_{BWP}, and may transmit/receive a data channel scheduled by the corresponding DCI in the newly changed bandwidth part. In addition, the UE may transmit/receive a data channel scheduled by the corresponding DCI in the changed new bandwidth part. If the base station wants to schedule a data channel by using the new bandwidth part, the base station may determine time domain resource allocation regarding the data channel in consideration of the UE's bandwidth part change delay time (T_{BWP}). For example, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI indicating a bandwidth part change will indicate a slot offset (K0 or K2) value smaller than the bandwidth part change delay time (T_{BWP}).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

### [SS/PBCH block]

Next, synchronization signal (SS)/PBCH blocks in 5G will be described.

An SS/PBCH block may refer to a physical layer channel block including a primary synchronization signal (PSS), a secondary synchronization signal (SSS), and a PBCH. Details thereof are as follows.
- PSS: A PSS is signal which becomes a reference of downlink time/frequency synchronization, and provides information on a part of a cell ID.
- SSS: An SSS becomes a reference of downlink time/frequency synchronization, and provides information on the other part of the cell ID, which is not provided by the PSS. Additionally, the SSS may serve as a reference signal for PBCH demodulation of a PBCH.
- PBCH: A PBCH provides mandatory system information necessary for the UE to transmit/receive data channels and control channels. The mandatory system information may include search space-related control information indicating a control channel's radio resource mapping information, scheduling control information regarding a separate data channel for transmitting system information, and the like.
- SS/PBCH block: An SS/PBCH block includes a combination of a PSS, an SSS, and a PBCH. One or multiple SS/PBCH blocks may be transmitted within a time period of 5 ms, and each transmitted SS/PBCH block may be distinguished by an index.

The UE may detect the PSS and SSS in the initial access step, and may decode the PBCH. The UE may acquire an MIB from the PBCH, and this may be used to configure control resource set (CORESET) #0 (which may correspond to, for example, a control resource set having a control resource set index of 0). The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may obtain random access channel (RACH)-related configuration information necessary for the initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

### [PDCCH: Regarding DCI]

Next, downlink control information (DCI) in the 5G system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. The RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table d below, for example.

**[Table 4]**

| |
|---|
| - Identifier for DCI formats - [1] bit |
| - Frequency domain resource assignment - $\left[\left⌈{log}_{2}\left({N}_{RB}^{UL , BWP}\left({N}_{RB}^{UL , BWP}+1\right)/2\right)\right⌉\right]$ bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - TPC command for scheduled PUSCH - [2] bits |

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 5 below, for example.

**[Table 5]**

| | |
|---|---|
| - Carrier indicator - 0 or 3 bits | |
| - UL/SUL indicator - 0 or 1 bit | |
| - Identifier for DCI formats - [1] bits | |
| - Bandwidth part indicator - 0, 1 or 2 bits | |
| - Frequency domain resource assignment | |
| | • For resource allocation type 0, $\left⌈{N}_{RB}^{UL , BWP}/P\right⌉$ bits |
| | • For resource allocation type 1, $\left⌈{log}_{2}\left({N}_{RB}^{UL , BWP}\left({N}_{RB}^{UL , BWP}+1\right)/2\right)\right⌉$ bits |
| - Time domain resource assignment -1, 2, 3, or 4 bits | |
| - VRB-to-PRB mapping - 0 or 1 bit, only for resource allocation type 1. | |
| | • 0 bit if only resource allocation type 0 is configured; |
| | • 1 bit otherwise. |
| - Frequency hopping flag - 0 or 1 bit, only for resource allocation type 1. | |
| | • 0 bit if only resource allocation type 0 is configured; |
| | • 1 bit otherwise. |
| - Modulation and coding scheme - 5 bits | |
| - New data indicator - 1 bit | |
| - Redundancy version - 2 bits | |
| - HARQ process number - 4 bits | |
| - 1st downlink assignment index - 1 or 2 bits | |
| | • 1 bit for semi-static HARQ-ACK codebook; |
| | • 2 bits for dynamic HARQ-ACK codebook with single HARQ-ACK codebook. |
| - 2nd downlink assignment index - 0 or 2 bits | |
| | • 2 bits for dynamic HARQ-ACK codebook with two HARQ-ACK sub-codebooks; |
| | • 0 bit otherwise. |
| - TPC command for scheduled PUSCH - 2 bits | |
| - | $SRS resource indicator - \left⌈{log}_{2}\left({\sum }_{k = 1}^{{L}_{max}} \left(\begin{matrix}{N}_{SRS} \\ k\end{matrix}\right)\right)\right⌉$ or $\left⌈{log}_{2}\left({N}_{SRS}\right)\right⌉$ bits |
| | • $\left⌈{log}_{2}\left({\sum }_{k = 1}^{{L}_{max}} \left(\begin{matrix}{N}_{SRS} \\ k\end{matrix}\right)\right)\right⌉$ bits for non-codebook based PUSCH transmission; |
| | • $\left⌈{log}_{2}\left({N}_{SRS}\right)\right⌉$ bits for codebook based PUSCH transmission. |
| - Precoding information and number of layers -up to 6 bits | |
| - Antenna ports - up to 5 bits | |
| - SRS request - 2 bits | |
| - CSI request - 0, 1, 2, 3, 4, 5, or 6 bits | |
| - CBG transmission information - 0, 2, 4, 6, or 8 bits | |
| - PTRS-DMRS association - 0 or 2 bits. | |
| - beta_offset indicator - 0 or 2 bits | |
| - DMRS sequence initialization - 0 or 1 bit | |

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 6 below, for example.

**[Table 6]**

| |
|---|
| - Identifier for DCI formats - [1] bit |
| - Frequency domain resource assignment - $\left[\left⌈{log}_{2}\left({N}_{RB}^{DL , BWP}\left({N}_{RB}^{DL , BWP}+1\right)/2\right)\right⌉\right]$ bits |
| - Time domain resource assignment - X bits |
| - VRB-to-PRB mapping - 1 bit. |
| - Modulation and coding scheme - 5 bits |
| - New data indicator - 1 bit |
| - Redundancy version - 2 bits |
| - HARQ process number - 4 bits |
| - Downlink assignment index - 2 bits |
| - TPC command for scheduled PUCCH - [2] bits |
| - PUCCH resource indicator - 3 bits |
| - PDSCH-to-HARQ feedback timing indicator - [3] bits |

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 7 below, for example.

**[Table 7]**

| | |
|---|---|
| - Carrier indicator - 0 or 3 bits | |
| - Identifier for DCI formats - [1] bits | |
| - Bandwidth part indicator - 0, 1 or 2 bits | |
| - Frequency domain resource assignment | |
| | • For resource allocation type 0, $\left⌈{N}_{RB}^{DL , BWP}/P\right⌉$ bits |
| | • For resource allocation type 1, $\left⌈{log}_{2}\left({N}_{RB}^{DL , BWP}\left({N}_{RB}^{DL , BWP}+1\right)/2\right)\right⌉$ bits |
| - Time domain resource assignment -1, 2, 3, or 4 bits | |
| - VRB-to-PRB mapping - 0 or 1 bit, only for resource allocation type 1. | |
| | • 0 bit if only resource allocation type 0 is configured; |
| | • 1 bit otherwise. |
| - PRB bundling size indicator - 0 or 1 bit | |
| - Rate matching indicator - 0, 1, or 2 bits | |
| - ZP CSI-RS trigger - 0, 1, or 2 bits | |
| For transport block 1: | |
| - Modulation and coding scheme - 5 bits | |
| - New data indicator - 1 bit | |
| - Redundancy version - 2 bits | |
| For transport block 2: | |
| - Modulation and coding scheme - 5 bits | |
| - New data indicator - 1 bit | |
| - Redundancy version - 2 bits | |
| - HARQ process number - 4 bits | |
| - Downlink assignment index - 0 or 2 or 4 bits | |
| - TPC command for scheduled PUCCH - 2 bits | |
| - PUCCH resource indicator - 3 bits | |
| - PDSCH-to-HARQ_feedback timing indicator - 3 bits | |
| - Antenna ports - 4, 5 or 6 bits | |
| - Transmission configuration indication - 0 or 3 bits | |
| - SRS request - 2 bits | |
| - CBG transmission information - 0, 2, 4, 6, or 8 bits | |
| - CBG flushing out information - 0 or 1 bit | |
| - DMRS sequence initialization - 1 bit | |

### [PDCCH: CORESET, REG, CCE, and Search Space]

Hereinafter, a downlink control channel in a 5G communication system will be described in more detail with reference to the accompanying drawings.

FIG. 4 illustrates an example of a control resource set configuration of a downlink control channel in a wireless communication system according to an embodiment of the disclosure. FIG. 4 illustrates an example in which a UE bandwidth part 410 is configured along the frequency axis and two control resource sets (control resource set #1 401 and control resource set #2 402) are configured within one slot 420 along the time axis. The control resource sets 401 and 402 may be configured in a specific frequency resource 403 within the entire UE bandwidth part 410 along the frequency axis. The control resource sets may be each configured as one or multiple OFDM symbols along the time domain, and the number of the OFDM symbols may be defined as a control resource set duration 404. Referring to the example illustrated in FIG. 4, the control resource set #1 401 is configured with a control resource set duration of 2 symbols, and the control resource set #2 402 is configured with a control resource set duration of 1 symbol.

The base station may configure a control resource set in 5G described above for the **UE** through upper layer signaling (for example, system information, master information block (MIB), radio resource control (RRC) signaling). The description that a control resource set is configured for a **UE** may mean that information such as a control resource set identity, the control resource set's frequency location, and the control resource set's symbol duration is provided. For example, the information for configuring a control resource set may include the following pieces of information in Table 8 below.

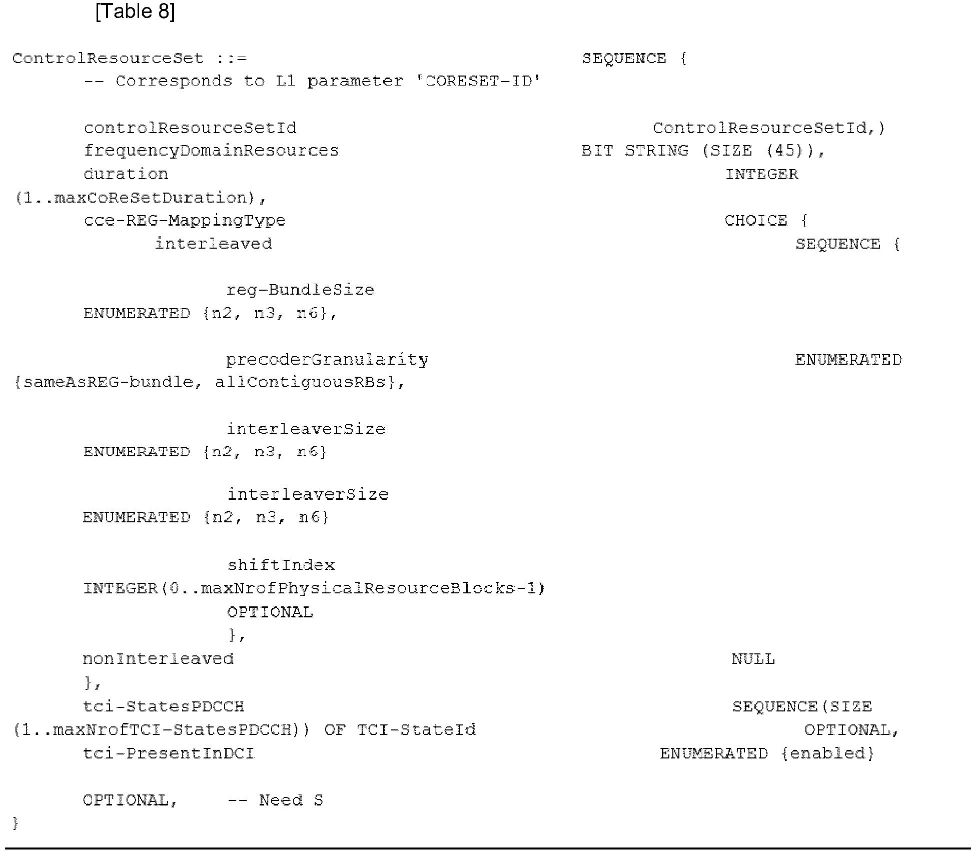

In Table 8, tci-StatesPDCCH (simply referred to as transmission configuration indication (TCI) state) configuration information may include information of one or multiple synchronization signal (SS)/physical broadcast channel (PBCH) block indexes or channel state information reference signal (CSI-RS) indexes, which are quasi-co-located (QCLed) with a DMRS transmitted in a corresponding control resource set.

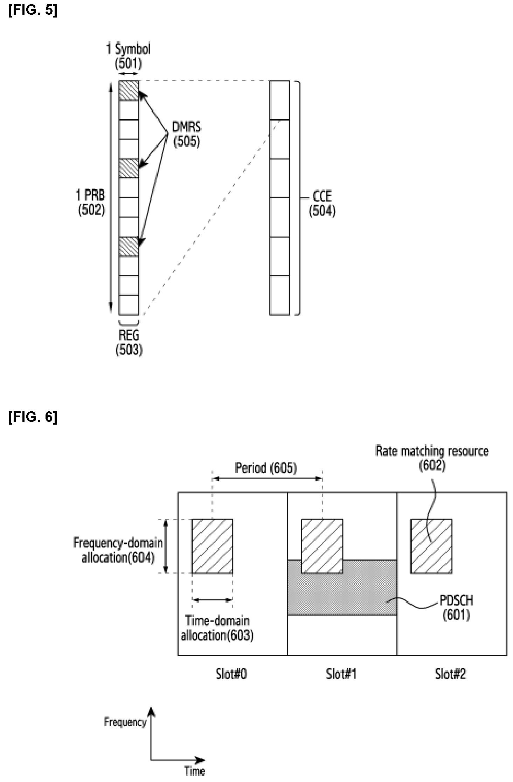

FIG. 5 illustrates a structure of a downlink control channel in a wireless communication system according to an embodiment of the disclosure. More specifically, FIG. 5 illustrates an example of a basic unit of time and frequency resources constituting a downlink control channel available in 5G.

According to FIG. 5, the basic unit of time and frequency resources constituting a control channel may be referred to as a resource element group (REG) 503, and the REG 503 may be defined by one OFDM symbol 501 along the time axis and one physical resource block (PRB) 502 (e.g., 12 subcarriers) along the frequency axis. The base station may configure a downlink control channel allocation unit by concatenating the REGs 503.

Provided that the basic unit of downlink control channel allocation in 5G is a control channel element (CCE) 504 as illustrated in FIG. 5, one CCE 504 may include multiple REGs 503. To describe the REG 503 illustrated in FIG. 5, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. As in FIG. 5, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs.

The UE needs to detect a signal while being no information regarding the downlink control channel, and thus a search space indicating a set of CCEs may be defined for blind decoding. The search space may be a set of downlink control channel candidates including CCEs that the UE must attempt to decode in a given aggregation level. Since there are various aggregation levels making one bundle of 1, 2, 4, 8, or 16 CCEs, the UE may have a plurality of search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically based on a function of various system parameters and the identity of the UE.

In 5G, parameters for a search space regarding a PDCCH may be configured for the UE by the base station through upper layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, parameters of the search space for the PDCCH may include the following pieces of information given in Table 9 below.

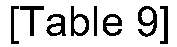

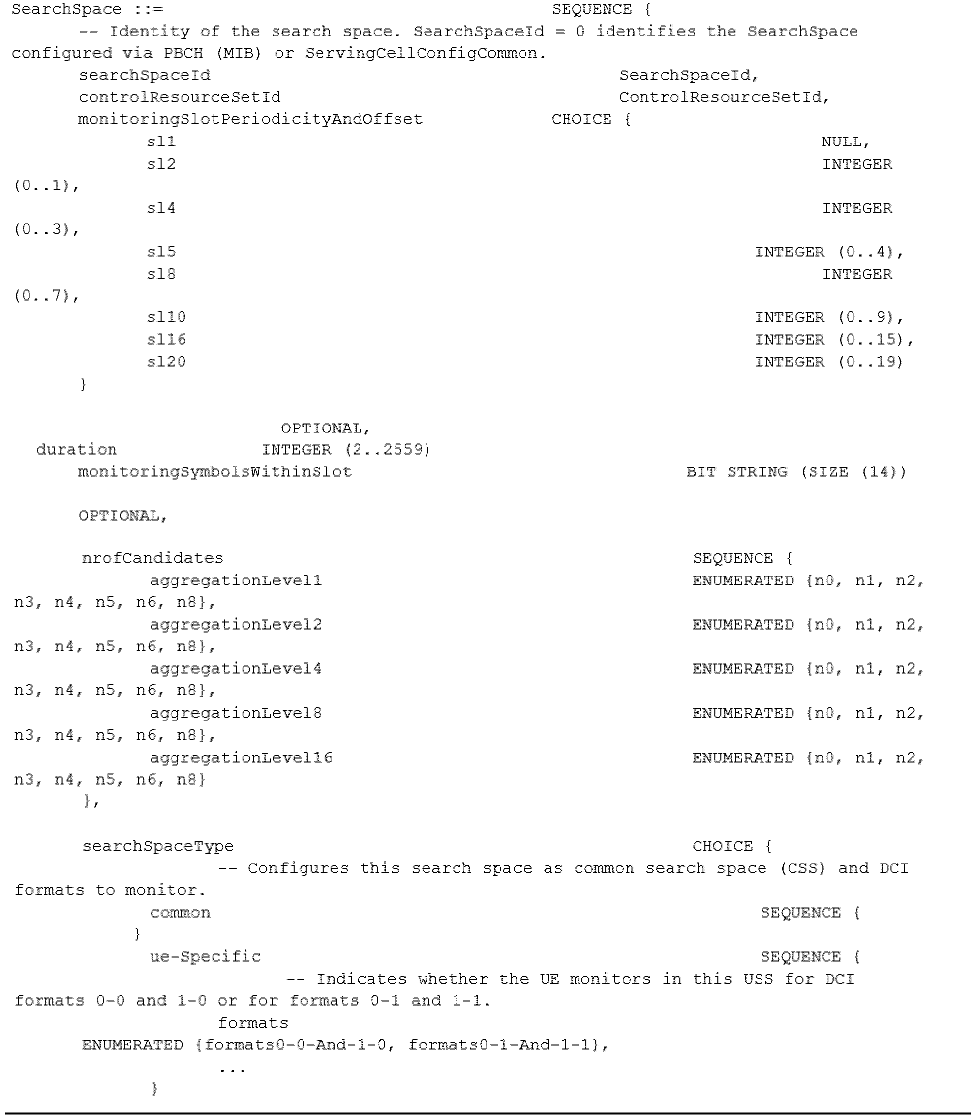

According to configuration information, the base station may configure one or multiple search space sets for the UE. According to some embodiments, the base station may configure search space set 1 and search space set 2 for the UE. The base station may configure search space set 1 for the UE to monitor DCI format A scrambled by an X-RNTI in a common search space, and may configure search space set 2 for the UE to monitor DCI format B scrambled by a Y-RNTI in a UE-specific search space.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs below may be monitored in the common search space, but they are merely examples and the disclosure is not limited to the following examples.
DCI format 0_0/1_0 with CRC scrambled by C-RNTI, CS-RNTI, SP-CSI-RNTI, RA-RNTI, TC-RNTI, P-RNTI, SI-RNTI
DCI format 2_0 with CRC scrambled by SFI-RNTI
DCI format 2_1 with CRC scrambled by INT-RNTI
DCI format 2_2 with CRC scrambled by TPC-PUSCH-RNTI, TPC-PUCCH-RNTI
DCI format 2_3 with CRC scrambled by TPC-SRS-RNTI

Combinations of DCI formats and RNTIs below may be monitored in the UE-specific search space, but they are merely examples and the disclosure is not limited to the following examples.
DCI format 0_0/1_0 with CRC scrambled by C-RNTI, CS-RNTI, TC-RNTI
DCI format 1_0/1_1 with CRC scrambled by C-RNTI, CS-RNTI, TC-RNTI
Enumerated RNTIs may follow the definition and usage given below
Cell RNTI (C-RNTI): used to schedule a UE-specific PDSCH
Temporary cell RNTI (TC-RNTI): used to schedule a UE-specific PDSCH

Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS
The DCI formats enumerated above may follow the definitions given in Table 10 below, for example.

**[Table 10]**

| **DCI format** | **Usage** |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, the search space at aggregation level L in connection with control resource set p and search space set s may be expressed by Equation 1 below.

[Equation 1] $L ⋅ \left\{\left({Y}_{p , {n}_{s , f}^{μ}}+\left⌊\frac{{m}_{s , {n}_{CI}} ⋅ {N}_{CCE , p}}{L ⋅ {M}_{s , max}^{\left(L\right)}}\right⌋+{n}_{CI}\right)mod\left⌊\frac{{N}_{CCE , p}}{L}\right⌋\right\} + i$
- *L*: aggregation level
- *n_{CI}:* carrier index
- *N_{CCE,p}*: total number of CCEs existing in control resource set *p*
- ${n}_{s , f}^{μ}$: slot index
- ${M}_{s , max}^{\left(L\right)}$: number of PDCCH candidates at aggregation level L
- PDCCH candidate index at aggregation level L
- *i* = 0, ..., *L* -1
- ${Y}_{p , {n}_{s , f}^{μ}} = \left({A}_{p}⋅{Y}_{p , {n}_{s , f}^{μ} - 1}\right) mod D$*, Y_{p,-1} = n_{RNTI}* ≠ *0*, *Aₚ* = *39827 for pmod3 = 0, Aₚ* = *39829 for pmod3 = 1, Aₚ* = 39839 *for pmod3 = 2, D = 65537*
- *n_{RNTI}*: UE identity

The ${Y}_{p , {n}_{s , f}^{μ}}$ value may correspond to 0 in the case of a common search space.

The ${Y}_{p , {n}_{s , f}^{μ}}$ value may correspond to a value changed by the UE's identity (C-RNTI or ID configured for the UE by the base station) and the time index in the case of a UE-specific search space.

In 5G, multiple search space sets may be configured by different parameters (e.g., parameters in Table 9), and the group of search space sets monitored by the UE at each time point may differ accordingly. For example, if search space set #1 is configured by X-slot cycle, if search space set #2 is configured at by Y-slot cycle, and if X and Y are different, the UE may monitor search space set #1 and search space set #2 both in a specific slot, and may monitor one of search space set #1 and search space set #2 in another specific slot.

FIG. 6 illustrates an example of a method in which a base station and a UE transmit/receive data in consideration of a downlink data channel and a rate matching resource in a wireless communication system according to an embodiment of the disclosure.

Referring to FIG. 6, FIG. 6 illustrates a downlink data channel (PDSCH) 601 and a rate matching resource 602. The base station may configure one or multiple rate matching resources 602 for the UE through upper layer signaling (e.g., RRC signaling). Rate matching resource 602 configuration information may include time-domain resource allocation information 603, frequency-domain resource allocation information 604, and periodicity information 605. As used hereinafter, a bitmap corresponding to the frequency-domain resource allocation information 604 will be referred to as "first bitmap", a bitmap corresponding to the time-domain resource allocation information 603 will be referred to as "second bitmap", and a bitmap corresponding to the periodicity information 605 will be referred to as "third bitmap". If all or some of time and frequency resources of the scheduled PDSCH 601 overlap a configured rate matching resource 602, the base station may rate-match and transmit the PDSCH 602 in a rate matching resource 601 part, and the UE may perform reception and decoding after assuming that the PDSCH 602 has been rate-matched in a rate matching resource 601 part.

The base station may dynamically notify the UE, through DCI, of whether the PDSCH will be rate-matched in the configured rate matching resource part through an additional configuration (for example, corresponding to "rate matching indicator" inside DCI format described above). To be specific, the base station may select some of the configured rate matching resources and group the selected rate matching resources into rate matching resource groups. The base station may indicate, to the UE, whether data channels are rate-matched to the respective rate matching groups, by using a bitmap scheme through DCI. For example, if four rate matching resources RMR#1, RMR#2, RMR#3, and RMR#4 are configured, the base station may configure a rate matching groups RMG#1={RMR#1, RMR#2}, RMG#2={RMR#3, RMR#4}, and may indicate, to the UE, whether rate matching occurs in RMG#1 and RMG#2, respectively, through a bitmap by using two bits inside the DCI field. For example, in a case where rate matching is to be conducted, the base station may indicate this case by "1", and in a case where rate matching is not to be conducted, the base station may indicate this case by "0".

5G supports granularity of "RB symbol level" and "RE level" as a method for configuring the above-described rate matching resources for a UE. More specifically, the following configuration method may be followed.

### RB symbol level

The UE may have a maximum of four RateMatchPatterns configured per each bandwidth part through upper layer signaling, and one RateMatchPattern may include the following contents. Obviously, the examples given below are not limiting.
- may include, in connection with a reserved resource inside a bandwidth part, a resource having time and frequency resource domains of the corresponding reserved resource configured as a combination of an RB-level bitmap and a symbol-level bitmap in the frequency domain. The reserved resource may be across one or more slots (for example, may span one or two slots). A time domain pattern (periodicityAndPattern) may be additionally configured wherein time and frequency domains including respective RB-level and symbol-level bitmap pairs are repeated.
- may include a resource area corresponding to a time domain pattern configured by time and frequency domain resource areas configured by a CORESET inside a bandwidth part and a search space configuration in which corresponding resource areas are repeated.

### RE level

The UE may have the following contents configured through upper layer signaling. Obviously, the examples given below are not limiting.
- configuration information (lte-CRS-ToMatchAround) regarding a RE corresponding to a LTE CRS (Cell-specific Reference Signal or common reference signal) pattern, which may include LTE CRS's port number (nrofCRS-Ports) and LTE-CRS-vshift(s) value (v-shift), location information (carrierFreqDL) of a center subcarrier of a LTE carrier from a reference frequency point (for example, reference point A), the LTE carrier's bandwidth size (carrierBandwidthDL) information, subframe configuration information (mbsfn-SubframConfigList) corresponding to a multicast-broadcast single-frequency network (MBSFN), and the like. The UE may determine the location of the CRS inside the NR slot corresponding to the LTE subframe, based on the above-described information.
- may include configuration information regarding a resource set corresponding to one or multiple zero power (ZP) CSI-RSs inside a bandwidth part.

### [PDSCH/PUSCH: Regarding frequency resource assignment]

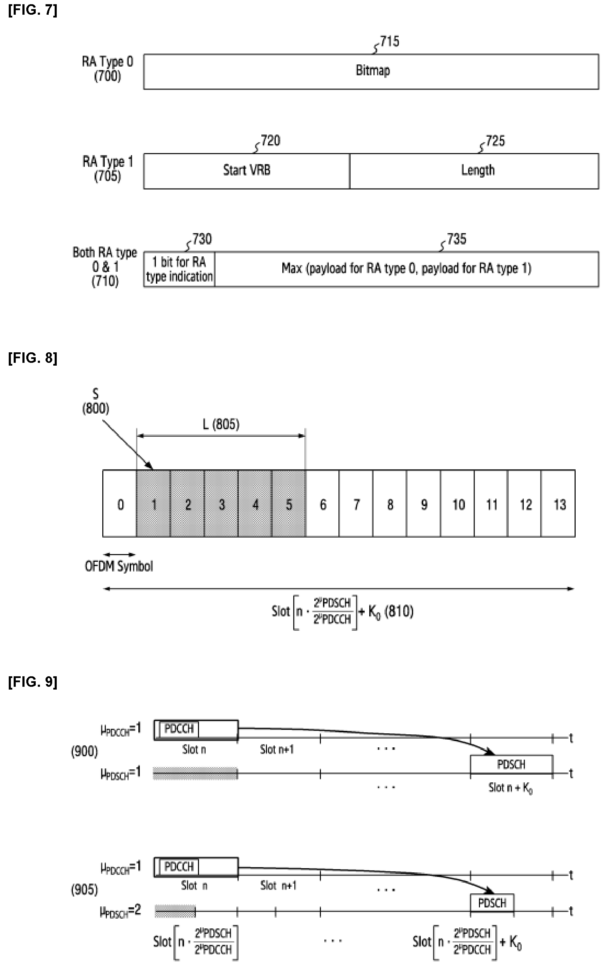

FIG. 7 illustrates an example of frequency domain resource allocation with regard to a physical downlink shared channel (PDSCH) in a wireless communication system according to an embodiment of the disclosure. More specifically, FIG. 7 illustrates an example of frequency domain resource allocation with regard to a physical downlink shared channel (PDSCH) or physical uplink shared channel (PUSCH) in a wireless communication system according to an embodiment of the disclosure.

FIG. 7 illustrates three frequency domain resource allocation methods of type-0 700, type-1 705, and dynamic switch 710 which are configurable through an upper layer in an NR wireless communication system.

Referring to FIG. 7, if a UE is configured to use only resource allocation type-0 through upper-layer signaling (700), partial downlink control information (DCI) for scheduling a PDSCH or a PUSCH for the UE includes a bitmap configured by N_{RBG} bits. As used herein, N_{RBG} may refer to the number of resource block groups (RBGs) determined according to the size of the bandwidth part indicated by the bandwidth part indicator and upper layer parameter rbg-Size, as in Table 11 below, and data may be transmitted in the RBG marked as 1 by the bitmap.

**[Table 11]**

| **Bandwidth Part Size** | **Configuration 1** | **Configuration 2** |
|---|---|---|
| 1 - 36 | 2 | 4 |
| 37 - 72 | 4 | 8 |
| 73 - 144 | 8 | 16 |
| 145 - 275 | 16 | 16 |

The BWP size may include the number of RBs included in the BWP. More specifically, if resource allocation type-0 is indicated to a UE, the length of the frequency domain resource assignment (FDRA) field of the DCI received by the UE is equal to the number of RBGs (N_{RBG}), and ${N}_{RBG} = \left⌈\left({N}_{BWP}^{size}+\left({N}_{BWP}^{start} modP\right)\right)/P\right⌉$ *.* Here, the first RBG may include as many RBs as ${RBG}_{0}^{size} = P - {N}_{BWP}^{size} mod P$*,* and the last RBG may include as many RBs as ${RBG}_{last}^{size} = \left({N}_{BWP}^{start}+{N}_{BWP}^{size}\right) mod P$ if $\left({N}_{BWP}^{start}+{N}_{BWP}^{size}\right) mod P > 0$, and include as many RBs as ${RBG}_{last}^{size} = P$ otherwise. The other RBGs may include P RBs. Here, P is the number of nominal RBGs determined according to Table 11 above.

If the UE is configured to use only resource allocation type 1 through upper-layer signaling (705), the DCI for allocating a PDSCH or a PUSCH to the UE includes frequency domain resource allocation (FDRA) information configured by as many bits as $\left⌈{log}_{2}\left({N}_{RB}^{BWP}∗\left({N}_{RB}^{BWP}+1\right)/2\right.\right⌉$. Here, ${N}_{RB}^{BWP}$ refers to the number of RBs included in the bandwidth part. The base station may thereby configure a starting VRB 720 and the length 725 of a frequency domain resource allocated consecutively therefrom.

If the UE is configured to use both resource allocation type-0 and resource allocation type-1 through upper layer signaling (710), partial DCI for allocating a PDSCH to the corresponding UE includes frequency domain resource allocation information including as many bits as the larger value 735 among the payload 715 for configuring resource allocation type-0 and the payload 720 and 725 for configuring resource allocation type 1. The conditions for this will be described again later. One bit may be added to the foremost part (MSB) of the frequency domain resource allocation information inside the DCI, and if the bit has the value of "0", use of resource type- 0 may be indicated, and if the bit has the value of "1", use of resource type-1 may be indicated.

### [PDSCH/PUSCH: Regarding time resource allocation]

Hereinafter, a time domain resource allocation method regarding a data channel in a next-generation mobile communication system (5G or NR system) will be described.

A base station may configure a table for time domain resource allocation information regarding a physical downlink shared channel (PDSCH) and a physical uplink shared channel (PUSCH) for a UE through upper layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a time point at which a PDCCH is received and a time point at which a PDSCH scheduled by the received PDCCH is transmitted; labeled K0), PDCCH-to-PUSCH slot timing (for example, corresponding to a slot-unit time interval between a time point at which a PDCCH is received and a time point at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 12 or Table 13 below may be transmitted from the base station to the UE.

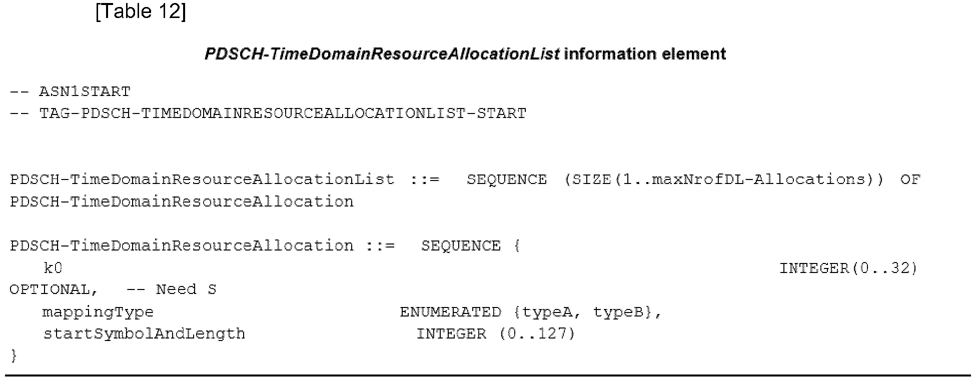

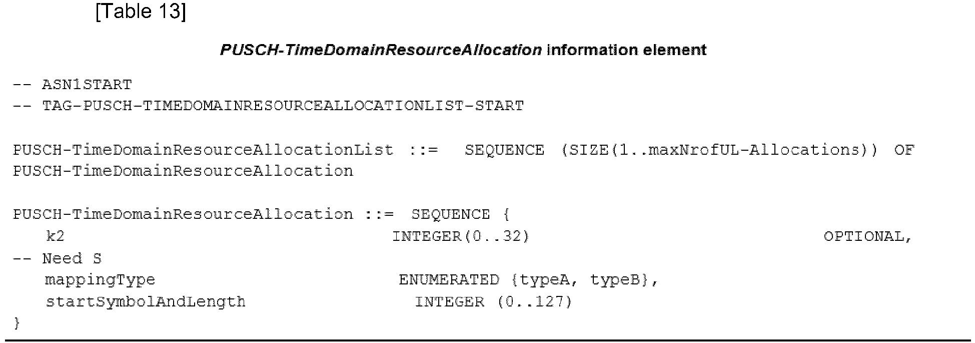

The base station may notify the UF of one of the entries of the table regarding time domain resource allocation information described above through L1 signaling (for example, DCI)(for example, "time domain resource allocation" field in DCI may indicate the same). The UE may acquire time domain resource allocation information regarding a PDSCH or PUSCH, based on the DCI acquired from the base station.

FIG. 8 illustrates an example of time domain resource allocation with regard to a PDSCH in a wireless communication system according to an embodiment of the disclosure.

Referring to FIG. 8, the base station may indicate the time domain location of a PDSCH resource according to the subcarrier spacing (SCS) (*µ*_{PDSCH}, *µ*_{PDCCH}) of a data channel and a control channel configured by using a higher layer, the scheduling offset (K0) value, and the OFDM symbol start location 1000 and length 1005 within one slot dynamically indicated through DCI.

FIG. 9 illustrates an example of time domain resource allocation according to subcarrier spacings with regard to a data channel and a control channel in a wireless communication system according to an embodiment of the disclosure.

Referring to FIG. 9, if the data channel and the control channel have the same subcarrier spacing (900, *µ*_{PDSCH} = *µ*_{PDCCH}), the slot number for data and that for control are identical, and the base station and the UE may accordingly generate a scheduling offset in conformity with a predetermined slot offset K0. On the other hand, if the data channel and the control channel have different subcarrier spacings (905, *µ*_{PDSCH} ≠ *µ*_{PDCCH}), the slot number for data and that for control are different, and the base station and the UE may accordingly generate a scheduling offset in conformity with a predetermined slot offset K0 with reference to the subcarrier spacing of the PDCCH.

### [PUSCH: Regarding transmission scheme]

Hereinafter, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrantConfig including rrc-ConfiguredUplinkGrant in Table 14 through upper signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 14 through upper signaling. If PUSCH transmission is operated by a configured grant, parameters applied to the PUSCH transmission are applied through configuredGrantConfig (upper signaling) in Table 14 except for dataScramblingldentityPUSCH, txConfig, codebookSubset, maxRank, and scaling of UCI-OnPUSCH, which are provided by pusch-Config (upper signaling) in Table 15. If provided with transformPrecoder inside configuredGrantConfig (upper signaling) in Table 14, the UE applies tp-pi2BPSK inside pusch-Config in Table 15 to PUSCH transmission operated by a configured grant.

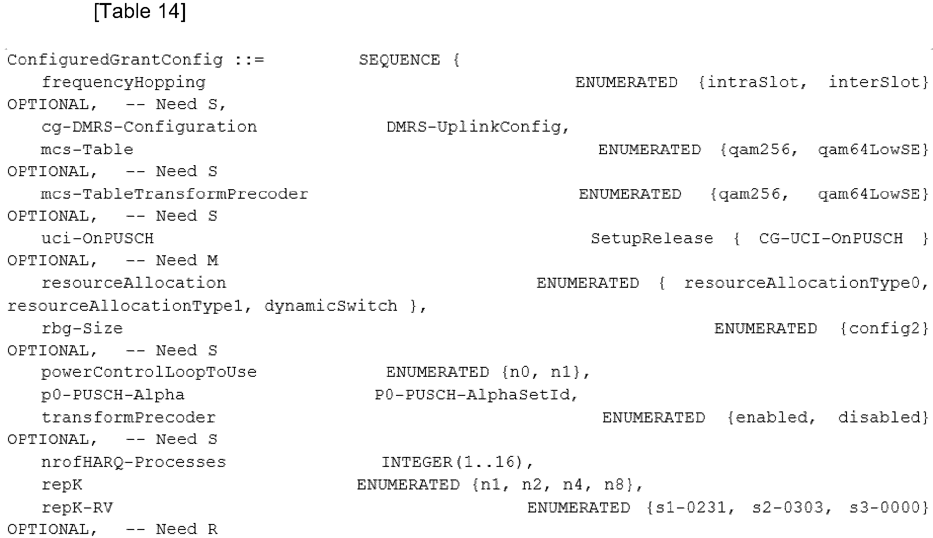

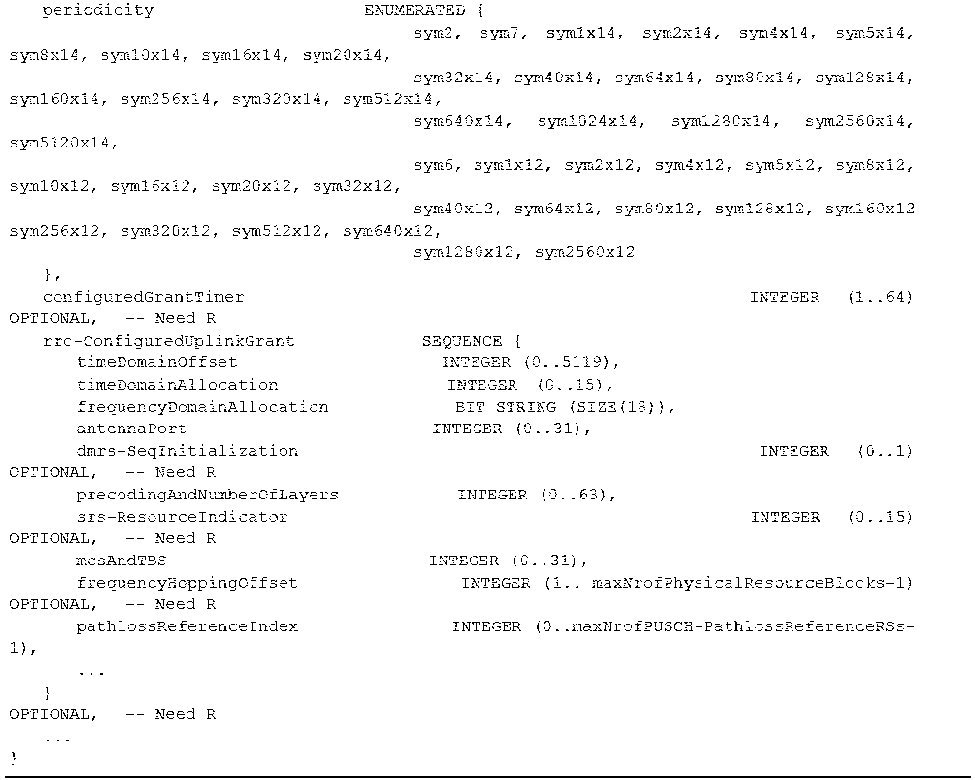

Hereinafter, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 15, which is upper signaling, is "codebook" or "nonCodebook".

As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE may perform beam configuration for PUSCH transmission by using pucch-spatialRelationlnfolD corresponding to a UE-specific PUCCH resource corresponding to the minimum ID inside an activated uplink BWP inside a serving cell. The PUSCH transmission may be based on a single antenna port. The UE may not expect scheduling regarding PUSCH transmission through DCI format 0_0 inside a BWP having no configured PUCCH resource including pucch-spatialRelationInfo. If the UE has no configured txConfig inside pusch-Config in Table 15, the UE may not expect scheduling through DCI format 0_1.

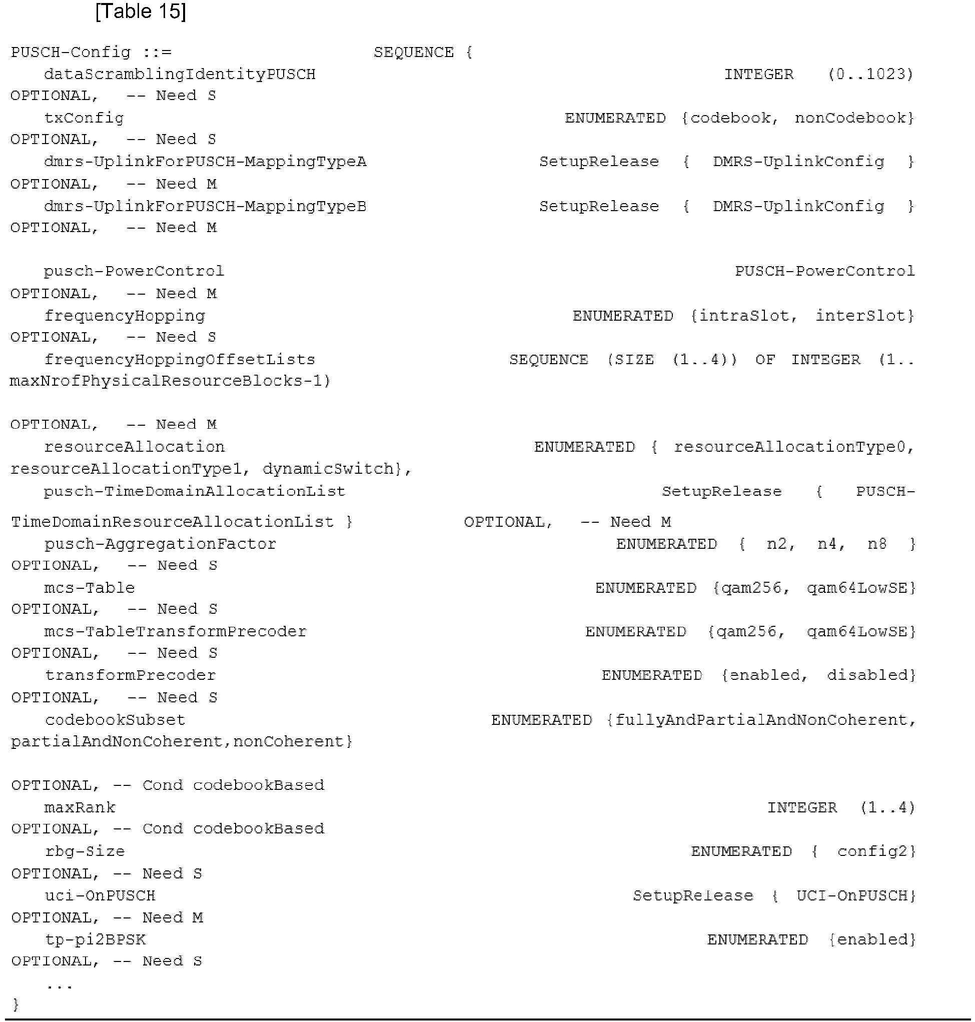

Hereinafter, codebook-based PUSCH transmission will be described. The codebook-based PUSCH transmission may be dynamically scheduled through DCI format 0_0 or 0_1, and may be operated semi-statically by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmit precoding matrix indicator (TPMI), and a transmission rank (the number of PUSCH transmission layers).

The SRI may be indicated through the SRS resource indicator (a field inside DCI) or configured through srs-ResourceIndicator (upper signaling). When transmitting codebook-based PUSCH, the UE may be configured with at least one SRS resource, and may be configured with up to two. If the UE is provided with the SRI through DCI, the SRS resource indicated by the corresponding SRI refers to the SRS resource corresponding to the SRI, among SRS resources transmitted prior to the PDCCH including the corresponding SRI. The TPMI and the transmission rank may be given through "precoding information and number of layers" (a field inside DCI) or configured through precodingAndNumberOfLayers (upper signaling). The TPMI may be used to indicate a precoder to be applied to PUSCH transmission. If one SRS resource is configured for the UE, the TPMI may be used to indicate a precoder to be applied in the configured SRS resource. If multiple SRS resources are configured for the UE, the TPMI is used to indicate a precoder to be applied in an SRS resource indicated through the SRI.

The precoder to be used for PUSCH transmission may be selected from an uplink codebook having the same number of antenna ports as the value of nrofSRS-Ports inside SRS-Config (higher signaling). In connection with codebook-based PUSCH transmission, the UE may determine a codebook subset, based on codebookSubset inside pusch-Config (higher signaling) and TPMI. The codebookSubset inside pusch-Config, which is upper signaling, may be configured with one of "fullyAndPartialAndNonCoherent", "partialAndNonCoherent", or "nonCoherent" based on UE capability reported to the base station by the UE. If the UE reported "partialAndNonCoherent'" as UE capability, the UE may not expect that the value of codebookSubset (upper signaling) will be configured as "fullyAndPartialAndNonCoherent". If the UE reported "nonCoherent" as UE capability, UE may not expect that the value of codebookSubset (upper signaling) will be configured as "fullyAndPartialAndNonCoherent" or "partialAndNonCoherent". If nrofSRS-Ports inside SRS-ResourceSet (upper signaling) indicates two SRS antenna ports, the UE may not expect that the value of codebookSubset (upper signaling) will be configured as "partialAndNonCoherent".

The UE may have one SRS resource set configured therefor, wherein the value of usage inside SRS-ResourceSet (upper signaling) is "codebook". One SRS resource may be indicated through an SRI inside the corresponding SRS resource set. If multiple SRS resources are configured inside the SRS resource set wherein the value of usage inside SRS-ResourceSet (upper signaling) is "codebook", the UE expects that the value of nrofSRS-Ports inside SRS- Resource (upper signaling) is identical for all SRS resources.

The UE may transmit, to the base station, one or multiple SRS resources included in the SRS resource set wherein the value of usage is configured as "codebook" according to upper signaling. The base station may select one from the SRS resources transmitted by the UE and indicate the UE to be able to transmit a PUSCH by using transmission beam information of the corresponding SRS resource. In connection with the codebook-based PUSCH transmission, the SRI may be used as information for selecting the index of one SRS resource, and may be included in DCI. Additionally, the base station may add information indicating the rank and TPMI to be used by the UE for PUSCH transmission to the DCI. Using the SRS resource indicated by the SRI, the UE may apply, in performing PUSCH transmission, the precoder indicated by the rank and TPMI indicated based on the transmission beam of the corresponding SRS resource, thereby performing PUSCH transmission.

Hereinafter, non-codebook-based PUSCH transmission will be described. The non-codebook-based PUSCH transmission may be dynamically scheduled through DCI format 0_0 or 0_1, and may be operated semi-statically by a configured grant. If at least one SRS resource is configured inside an SRS resource set wherein the value of usage inside SRS-ResourceSet (higher signaling) is "nonCodebook", non-codebook-based PUSCH transmission may be scheduled for the UE through DCI format 0_1.

With regard to the SRS resource set wherein the value of usage inside SRS-ResourceSet (upper signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

If the configured value of resourceType inside SRS-ResourceSet (upper signaling) is "aperiodic", the connected NZP CSI-RS may be indicated by an SRS request which is a field inside DCI format 0_1 or 1_1. If the connected NZP CSI-RS resource is an aperiodic NZP CSI-RS resource, the existence of the connected NZP CSI-RS may be indicated with regard to the case in which the value of SRS request (a field inside DCI format 0_1 or 1_1) is not "00". The corresponding DCI may not indicate cross carrier or cross BWP scheduling. If the value of SRS request indicates the existence of a NZP CSI-RS, the NZP CSI-RS may be positioned in the slot used to transmit the PDCCH including the SRS request field. In this case, TCI states configured for the scheduled subcarrier may not be configured as QCL-TypeD.

If there is a periodic or semi-persistent SRS resource set configured, the connected NZP CSI-RS may be indicated through associatedCSI-RS inside SRS-ResourceSet (upper signaling). With regard to non-codebook-based transmission, the UE may not expect that spatialRelationInfo which is upper signaling regarding the SRS resource and associatedCSI-RS inside SRS-ResourceSet (higher signaling) will be configured together.

If the UE is configured with multiple SRS resources, the UE may determine a precoder and a transmission rank to be applied to PUSCH transmission, based on an SRI indicated by the base station. The SRI may be indicated through the SRS resource indicator (a field inside DCI) or configured through srs-ResourceIndicator (upper signaling). Similarly to the above-described codebook-based PUSCH transmission, if the UE is provided with the SRI through DCI, the SRS resource indicated by the corresponding SRI may refer to the SRS resource corresponding to the SRI, among SRS resources transmitted prior to the PDCCH including the corresponding SRI. The UE may use one or multiple SRS resources for SRS transmission. The maximum number of SRS resources that can be transmitted simultaneously in the same symbol inside one SRS resource set and the maximum number of SRS resources are determined by UE capability reported to the base station by the UE. SRS resources simultaneously transmitted by the UE may occupy the same RB. The UE may configure one SRS port for each SRS resource. There may be only one configured SRS resource set wherein the value of usage inside SRS-ResourceSet (upper signaling) is "nonCodebook", and a maximum of four SRS resources may be configured for non-codebook-based PUSCH transmission.

The base station may transmit one NZP-CSI-RS connected to the SRS resource set to the UE. The UE may calculate the precoder to be used when transmitting one or multiple SRS resources inside the corresponding SRS resource set, based on the result of measurement when the corresponding NZP-CSI-RS is received. The UE may apply the calculated precoder when transmitting, to the base station, one or multiple SRS resources inside the SRS resource set wherein the configured usage is "nonCodebook". The base station may select one or multiple SRS resources from the received one or multiple SRS resources. In connection with the non-codebook-based PUSCH transmission, the SRI may indicate an index that may express one SRS resource or a combination of multiple SRS resources. The SRI may be included in DCI. The number of SRS resources indicated by the SRI transmitted by the base station may be the number of transmission layers of the PUSCH. The UE may transmit the PUSCH by applying the precoder applied to SRS resource transmission to each layer.

### [Regarding CA/DC]

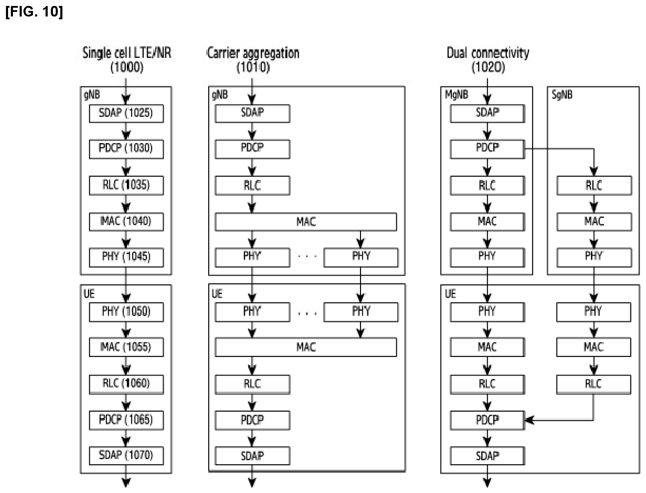

FIG. 10 illustrates radio protocol structures of a base station and a UE in single cell, carrier aggregation, and dual connectivity situations according to an embodiment of the disclosure.

Referring to FIG. 10, a radio protocol of a next-generation mobile communication system includes an NR service data adaptation protocol (SDAP) 1025 or 1070, an NR packet data convergence protocol (PDCP) 1030 or 1065, an NR radio link control (RLC) 1035 or 1060, and an NR medium access controls (MAC) 1040 or 1055, on each of UE and NR base station sides.

The main functions of the NR SDAP 1025 or 1070 may include some of functions below.
- Transfer of user plane data
- Mapping between a QoS flow and a DRB for both the UL and the DL
- Marking QoS flow ID in both DL and UL packets
- Reflective QoS flow to DRB mapping for the UL SDAP PDUs

With regard to the SDAP layer device, whether to use the header of the SDAP layer device or whether to use functions of the SDAP layer device may be configured for the UE through an RRC message according to PDCP layer devices or according to bearers or according to logical channels. If an SDAP header is configured, the non-access stratum (NAS) quality of service (QoS) reflection configuration 1-bit indicator (NAS reflective QoS) of the SDAP header and the access stratum (AS) QoS reflection configuration 1-bit indicator (AS reflective QoS) may indicate, to the UE, that the UE can update or reconfigure mapping information regarding the QoS flow and data bearer of the uplink and downlink. The SDAP header may include QoS flow ID information indicating QoS. The QoS information may be used as data processing priority, scheduling information, etc. for smoothly supporting services.

The main functions of the NR PDCP 1030 or 1065 may include some of the following functions: below.
- Header compression and decompression: robust header compression (ROHC) only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

Referring to the above-mentioned functions, the reordering of the NR PDCP device may refer to a function of reordering PDCP PDU received from a lower layer in an order based on PDCP sequence numbers (SNs). The reordering may include a function of transferring data to an upper layer in the reordered sequence. The reordering of the NR PDCP device may include a function of instantly transferring data without considering the order, and may include a function of recording PDCP PDUs lost as a result of reordering. The reordering may include a function of reporting the state of the lost PDCP PDUs to the transmitting side, and may include a function of requesting retransmission of the lost PDCP PDUs.

The main functions of the NR RLC 1035 or 1060 may include some of the following functions: below.
- Transfer of upper layer PDUs
- In-sequence delivery of upper layer PDUs
- Out-of-sequence delivery of upper layer PDUs
- ARQ function (error correction through ARQ)
- Concatenation, segmentation, and reassembly of RLC SDUs
- Re-segmentation of RLC data PDUs
- Reordering of RLC data PDUs
- Duplicate detection
- Protocol error detection
- RLC SDU discard
- RLC re-establishment

The above-mentioned in-sequence delivery of the NR RLC device may refer to a function of successively delivering RLC SDUs received from the lower layer to the upper layer. The in-sequence delivery of the NR RLC device may include a function of, if one original RLC SDU is segmented into multiple RLC SDUs and the segmented RLC SDUs are received, reassembling the RLC SDUs and delivering the reassembled RLC SDUs. The in-sequence delivery of the NR RLC device may include a function of reordering the received RLC PDUs with reference to the RLC sequence number (SN) or PDCP sequence number (SN) and a function of recording RLC PDUs lost as a result of reordering. The in-sequence delivery of the NR RLC device may include a function of reporting the state of the lost RLC PDUs to the transmitting side, and may include a function of requesting retransmission of the lost RLC PDUs. The in-sequence delivery function of the NR RLC device may include a function of, if there is a lost RLC SDU, successively delivering only RLC SDUs before the lost RLC SDU to the upper layer. The in-sequence delivery function of the NR RLC device may include a function of, if a predetermined timer has expired although there is a lost RLC SDU, successively delivering all RLC SDUs received before the timer is started, to the upper layer. Alternatively, the in-sequence delivery of the NR RLC device may include a function of delivering all the RLC SDUs received to date to the upper layer in sequence if a predetermined timer is expired although there is a lost RLC SDU. In addition, the in-sequence delivery of the NR RLC device may process RLC PDUs in the received order (regardless of the sequence number order, in the order of arrival) and deliver same to the PDCP device regardless of the order (out-of-sequence delivery). The in-sequence delivery of the NR RLC device may, in the case of segments, receive segments which are stored in a buffer or which are to be received later, reconfigure same into one complete RLC PDU, and then process and deliver same to the PDCP device. The NR RLC layer may include no concatenation function, which may be performed in the NR MAC layer or replaced with a multiplexing function of the NR MAC layer.

The above-described out-of-sequence delivery of the NR RLC device may refer to a function of delivering RLC SDUs, received from the lower layer, directly to the upper layer, regardless of sequence. The out-of-sequence delivery of the NR RLC device may include a function of reassembling and delivering multiple RLC SDUs received, into which one original RLC SDU has been segmented, and may include a function of storing the RLC SN or PDCP SN of received RLC PDUs, and recording RLC PDUs lost as a result of reordering.

The NR MAC 1040 or 1055 may be connected to multiple NR RLC layer devices configured in one UE, and the main functions of the NR MAC may include some of functions below.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer 1045 or 1050 may perform operations of channel-coding and modulating upper layer data, thereby obtaining OFDM symbols, and delivering the same through a radio channel. The NR PHY layer may perform operations of demodulating OFDM symbols received through the radio channel, channel-decoding the same, and delivering the same to the upper layer.

The detailed structure of the radio protocol structure may be variously changed according to the carrier (or cell) operating scheme. According to an embodiment, in case that the base station transmits data to the UE, based on a single carrier (or cell), the base station and the UE may use a protocol structure having a single structure with regard to each layer (1010). In case that the base station transmits data to the UE, based on carrier aggregation(CA) which uses multiple carriers in a single TRP, the base station and the UE may use a protocol structure which has a single structure up to the RLC, but multiplexes the PHY layer through a MAC layer (1020). According to another embodiment, in case that the base station transmits data to the UE, based on carrier aggregation(CA) which uses multiple carriers in a single TRP, the base station and the UE may use a protocol structure which has a single structure up to the RLC, but multiplexes the PHY layer through an MAC layer (1030).

Referring to the above-described PDCCH and beam configuration-related descriptions, since PDCCH repeated transmission is not supported in current Rel-15 and Rel-16 NR, it is difficult to achieve the required reliability in scenarios in which high reliability is needed, such as URLLC. The disclosure may improve the PDCCH reception reliability of a UE by providing a PDCCH repetitive transmission method through multiple transmission points (TRPs). Specific methods thereof will be described hereinafter through the embodiments below.

Hereinafter, the embodiments of the disclosure will be described in detail in conjunction with the accompanying drawings. The contents of the disclosure may be applied to frequency division duplex (FDD) and time division duplex (TDD) systems, As used herein, upper signaling (or upper layer signaling") is a method for transferring signals from a base station to a UE by using a downlink data channel of a physical layer, or from the UE to the base station by using an uplink data channel of the physical layer, and may also be referred to as "RRC signaling", "PDCP signaling", or "MAC control element (MAC CE)".

Hereinafter, in the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed, for the sake of descriptive convenience, that NC-JT case refers to a case in which the UE receives a PDSCH to which cooperative communication is applied, based on conditions similar to those described above.

Hereinafter, in the present disclosure, determining a priority between A and B may be variously referred to as selecting one having a higher priority according to a predetermined priority rule and performing an operation corresponding thereto, or omitting or dropping an operation for one having a lower priority.

Hereinafter, the above examples may be described through several embodiments, but they are not independent of each other, and one or more embodiments may be applied simultaneously or in combination.

Hereinafter, the embodiments of the disclosure will be described in detail in conjunction with the accompanying drawings. As used hereinafter, a base station is an entity that allocates resources to terminals, and may be at least one of a gNode B, a gNB, an eNode B, a Node B, a base station (BS), a wireless access unit, a base station controller, or a node on a network. A terminal may include a user equipment (UE), a mobile station (MS), a cellular phone, a smartphone, a computer, or a multimedia system capable of performing communication functions. In the following description of embodiments of the disclosure, the 5G system will be described by way of example, but the embodiments of the disclosure may also be applied to other communication systems having similar technical backgrounds or channel types. Examples of such communication systems may include LTE or LTE-A mobile communication systems and mobile communication technologies developed beyond 5G. Therefore, based on determination by those skilled in the art, the embodiments of the disclosure may also be applied to other communication systems through some modifications without departing from the scope of the disclosure. The details of the disclosure are applicable to FDD and TDD systems.

Furthermore, in describing the disclosure, a detailed description of known functions or configurations incorporated herein will be omitted when it is determined that the description may make the subject matter of the disclosure unnecessarily unclear. Also, the terms which will be described below are terms defined in consideration of the functions in the disclosure, and may be different according to users, intentions of the users, or customs. Accordingly, the definitions thereof should be made based on the contents throughout the specification.

In the following description of the disclosure, upper layer signaling may refer to signaling corresponding to at least one signaling among the following signaling, or a combination of one or more thereof.
Master information block (MIB)
System information block (SIB) or SIB X (X=1, 2, ...)
Radio resource control (RRC)
Medium access control (MAC) control element (CE)

In addition, L1 signaling may refer to signaling corresponding to at least one signaling method among signaling methods using the following physical layer channels or signaling, or a combination of one or more thereof.
Physical downlink control channel (PDCCH)
Downlink control information (DCI)
   - UE-specific DCI
   - Group common DCI
   - Common DCI
Scheduling DCI (for example, DCI used for the purpose of scheduling downlink or uplink data)
Non-scheduling DCI (for example, DCI not used for the purpose of scheduling downlink or uplink data)

### Physical uplink control channel (PUCCH)

### Uplink control information (UCI)

As used hereinafter, determining a priority between A and B may refer to various operations such as selecting one having a higher priority according to a pre-determined priority rule and performing an operation corresponding to the selected one, omitting or dropping an operation corresponding to one having a lower priority, and the like.

Hereinafter, the above examples may be described through several embodiments, but they are not independent of each other, and one or more embodiments may be applied simultaneously or in combination.

### [Regarding SBFD]

In 3GPP, there has been ongoing discussion about subband non-overlapping full duplex (or subband full duplex, SBFD) as a new duplex scheme based on NR. The SBFD refers to a technology wherein a part of the downlink resource is used as the uplink resource in a TDD spectrum at a frequency of 6GHz or less or at a frequency of 6GHz or higher such that uplink transmission is received from a UE as much as the increased uplink resource, thereby expanding the UE's uplink coverage, and feedback regarding downlink transmission is received from the UE in the expanded uplink resource, thereby reducing feedback delay. As used herein, a UE capable of receiving information regarding whether SBFD is supported from the base station, and capable of performing uplink transmission in a part of the downlink resource may be referred to as an SBFD-capable UE for convenience of description. In order to define the SBFD scheme in specifications and to determine that the SBFD-capable UE supports SBFD in a specific cell (or frequency/frequency band), the following schemes may be considered:
- In the first scheme, besides the frame structure type of the existing unpaired spectrum (or time division duplex (TDD)) or paired spectrum (or frequency division duplex (FDD)), a different frame structure type (for example, frame structure type 2) may be introduced to define the above-described SBFD. Frame structure type 2 may be defined to be supported at a specific frequency or frequency band. Alternatively, the base station may indicate whether SBFD is supported to the UE through system information. The SBFD-capable UE may receive the system information indicating whether SBFD is supported and may thus determine whether SBFD is supported in a specific cell (or frequency/frequency band).
- In the second scheme, without defining a new frame structure type, it may be indicated whether SBFD is additionally supported at a specific frequency or frequency band of the existing unpaired spectrum (or TDD). According to the second scheme, it may be defined whether SBFD is additionally supported at a specific frequency or frequency band of the existing unpaired spectrum, or the base station may indicate whether SBFD is supported to the UE through system information. The SBFD-capable UE may receive the system information indicating whether SBFD is supported and may thus determine whether SBFD is supported in a specific cell (or frequency/frequency band).

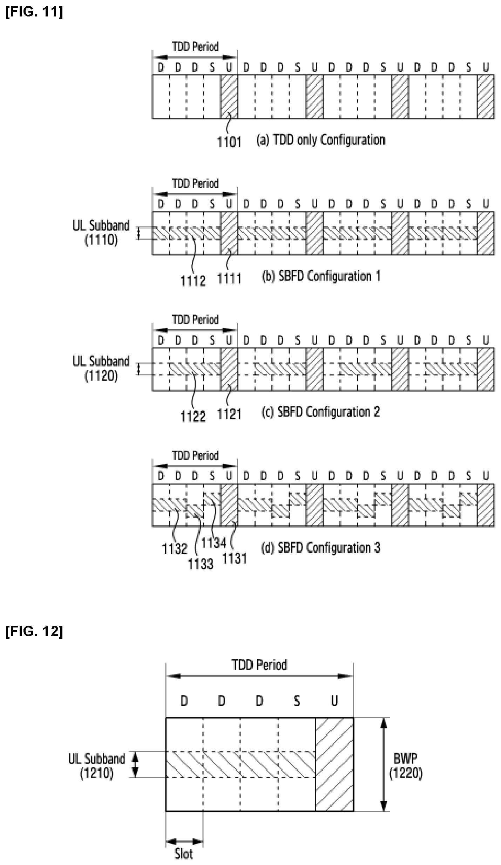

The information indicating whether SBFD is supported in the first and second schemes described above may additionally include information indirectly indicating whether SBFD is supported by configuring a part of the downlink resource as the uplink resource (for example, SBFD resource configuration information described later with reference to FIG. 11) besides a configuration regarding TDD uplink (UL)-downlink (DL) resource configuration information indicating TDD's downlink slot (or symbol) resource and uplink slot (or symbol) resource, or may include information directly indicating whether SBFD is supported.

In the disclosure, the SBFD-capable UE may acquire cell synchronization by receiving a synchronization signal block during an initial cell access for accessing a cell (or base station). The process of acquiring cell synchronization may be equally applied to the SBFD-capable UE and existing TDD terminals. Thereafter, the SBFD-capable UE may determine whether the cell supports SBFD through an MIB acquisition, SIB acquisition, or random access process.

According to an embodiment, system information for transmitting information regarding whether SBFD is supported may be distinguished from system information for a UE (for example, existing TDD UE) supporting a different version of specifications in the cell and transmitted separately. The SBFD-capable UE may acquire all or part of the system information transmitted separately from the system information for the existing TDD UE, thereby determining whether SBFD is supported. In case that the SBFD-capable UE acquires only the system information for the existing TDD UE, or in case that the SBFD-capable UE acquires system information indicating that SBFD is not supported, the SBFD-capable UE may determine that the cell (or base station) supports only TDD.

According to an embodiment, in case that information regarding whether SBFD is supported is included in system information for a UE (for example, existing TDD UE) supporting a different version of specifications, the information regarding whether SBFD is supported may be inserted at the last portion so as not to affect acquisition of the existing TDD UE's system information. In case that the SBFD-capable UE fails to acquire the information regarding whether SBFD is supported, which is inserted at the last portion, or in case that the SBFD-capable UE acquires information indicating that SBFD is not supported, the SBFD-capable UE may determine that the cell (or base station) supports only TDD.

According to an embodiment, in case that information regarding whether SBFD is supported is included in system information for a UE (for example, existing TDD UE) supporting a different version of specifications, the information regarding whether SBFD is supported may be transmitted through a separate PDSCH so as not to affect acquisition of the existing TDD UE's system information. For example, a UE that does not support SBFD may receive a first SIB (or SIB1) including existing TDD-related system information in a first PDSCH. An SBFD-supporting UE may receive a first SIB (or SIB) including legacy TDD-related system information through the first PDSCH, and may receive a second SIB including SBFD-related system information through the second PDSCH. The first PDSCH and the second PDSCH may be scheduled by a first PDCCH and a second PDCCH, and the cyclic redundancy code (CRC) of the first PDCCH and the second PDCCH may be scrambled by the same RNTI (for example, SI-RNTI). The search space for monitoring the second PDCCH may be acquired from the first PDCCH's system information and, if the same fails to be acquired (for example, if the first PDCCH's system information does not include information regarding the search space), the second PDCCH may be received in the same search space as the first PDCCH's search space.

In case that the SBFD-capable UE determines that the cell (or base station) supports only TDD as described above, the SBFD-capable UE may perform the same random access procedure and data/control signal transmission/reception as the existing TDD UE.

According to various embodiments, the base station may configure a separate random access resource for each of the existing TDD UE or SBFD-capable UE (for example, including both an SBFD-capable UE supporting duplex communication and an SBFD-capable UE supporting half-duplex communication), and may transmit configuration information (configuration information or control information indicating a time-frequency resource that may be used for the PRACH) regarding the random access resource to the SBFD-capable UE through system information. System information for transmitting information regarding a random access resource may include system information distinguished from system information for a UE (for example, existing TDD UE) supporting a different version of specifications in the cell and transmitted separately.

According to an embodiment, by configuring separate random access resources for the TDD UE supporting a different version of specifications and the SBFD-capable UE, the base station may distinguish whether the TDD UE supporting a different version of specifications performs random access or the SBFD-capable UE performs random access. For example, the separate random access resource configured for the SBFD-capable UE may be a resource that the existing TDD UE determines as a downlink time resource, and the SBFD-capable UE performs a random access through an uplink resource (or separate random access resource) configured in some frequencies of the downlink time resource, so that the base station may determine that the UE which has attempted the random access in the uplink resource is the SBFD-capable UE.

According to an embodiment, a base station may not configure a separate random access resource for an SBFD UE, and may configure a common random access resource for all UEs in a cell. In this case, configuration information regarding the random access resource may be transmitted to all UEs in the cell through system information, and the SBFD-capable UE may perform a random access to the random access resource after receiving the system information. Thereafter, the SBFD-capable UE may complete a random access process to enter an RRC connection mode for transmission or reception of data with the cell. After the RRC connected mode, the SBFD-capable UE may receive an upper or physical signal from the base station, thereby determining that a part of the frequency resource of the downlink time resource is configured as an uplink resource, and may accordingly perform an SBFD operation (for example, transmit an uplink signal in the configured uplink resource).

According to an embodiment, in case of determining that the cell supports SBFD, the SBFD-capable UE may transmit, to the base station, capability information including at least one from among information regarding whether the UE supports SBFD, information regarding whether full-duplex communication or half-duplex communication is supported, or the number of transmission or reception antennas which the same has (or supports), thereby informing the base station that the UE that attempts an access is the SBFD-capable UE. Alternatively, in case that support for half-duplex communication is an essential implementation for the SBFD-capable UE, the capability information may not include information regarding whether half-duplex communication is supported. The SBFD-capable UE may report capability information to the base station through a random access process, may separately report the same to the base station after completing the random access process, or may report the same to the base station after proceeding to an RRD connected mode for transmitting/receiving data with the cell.

According to an embodiment, the SBFD-capable UE may support half-duplex communication such that uplink transmission or downlink reception is solely performed at a specific moment like an existing TDD UE, or may support full-duplex communication such that uplink transmission and downlink reception are both performed at a specific moment. Therefore, whether the half-duplex communication or full-duplex communication is supported may be reported to the base station by the SBFD-capable UE through a capability report. After the reporting, the base station may configure, for the SBFD-capable UE, whether the SBFD-capable UE is to perform transmission/reception by using the half-duplex communication or full-duplex communication. In case that the SBFD-capable UE reports capability regarding the half-duplex communication to the base station, a switching gap may be necessary to change the RF between transmission and reception in case of operating based on FDD or TDD because no duplexer generally exists.

FIG. 11 illustrates an example of a time division duplex (TDD) configuration and a subband full duplex (SBFD) configuration according to an embodiment of the disclosure. More specifically, FIG. 11 illustrates an example in which SBFD is operated in a TDD band of a wireless communication system to which the disclosure is applied;

FIG. 11A illustrates a case where TDD is operated in a specific frequency band. A gNB in a cell that operates TDD may transmit/receive signals including data/control information with an existing TDD UE or SBFD-capable UE in a downlink slot (or symbol), an uplink slot (or symbol) 1101, or a flexible slot (or symbol), based on a configuration that follows TDD UL-DL resource configuration information that indicates TDD's downlink slot (or symbol) resource and uplink slot (or symbol) resource.

According to an embodiment, it may be assumed that a DDDSU slot format is configured according to the TDD UL-DL resource configuration information in FIG. 11. In this regard, "D" may refer to a slot entirely configured by downlink symbols, "U" may refer to a slot entirely configured by uplink symbols, and "S" may refer to a slot which is neither "D" nor "U" (for example, a slot including downlink symbols or uplink symbols or including flexible symbols). It may be assumed for convenience that "S" is configured by 12 downlink symbols and 2 flexible symbols, but this is only an example and is not limitative. The DDDSU slot format may be repeated according to the TDD UL-DL resource configuration information. For example, the TDD configuration's repetition period may include 5 slots (for example, in the case of 15kHz SCS, 5ms, in the case of 30kHz SCS, 2.5ms).

Next, FIG. 11B, FIG. 11C, and FIG. 11D illustrate cases in which TDD and SBFD are operated together in a specific frequency band.

Referring to FIG. 11B, a UE may be configured with a partial band of frequency of a cell, as a frequency band 1110 where uplink transmission is possible. Such a band may be referred to as a UL subband. The UL subband may be applied to all symbols of all slots. The UE may transmit a scheduled uplink channel or signal at all symbols 1212 in the UL subband. However, the UE cannot transmit uplink channels or signals in band other than the UL subband.

Referring to FIG. 11C, the UE may have a partial frequency band of the cell configured as a frequency band 1120 in which uplink transmission is possible, and may have a configured time area in which a frequency band is activated. Such a frequency band may be referred to as a UL subband. Referring to FIG. 11C, the UL subband on the first slot may be deactivated, and the UL subband on remaining slots may be activated. Therefore, the UE may transmit uplink channels or signals on the UL subband 1122 of remaining slots. That is, FIG. 11C illustrates an example in which the UL subband is activated with regard to each slot, but this is only an example, and it is obvious that activation/deactivation may be configured with regard to each symbol.

Referring to FIG. 11D, a UE may be configured with a time-frequency resource on which uplink transmission is possible. The UE may have one or more time-frequency resources configured as time-frequency resources in which uplink transmission is possible. For example, a partial frequency band 1132 of the first and second slots may be configured for the UE as a time-frequency resource in which uplink transmission is possible. In addition, a partial frequency band 1133 of the third slot and a partial frequency band 1134 of the fourth slot may be configured for the UE as a time-frequency resource in which uplink transmission is possible.

In the following description, a time-frequency resource available for uplink transmission within a downlink symbol or slot may be referred to as an SBFD resource. In addition, a symbol in which an uplink subband is configured within a downlink symbol may be referred to as an SBFD symbol. In addition, a time-frequency resource available for downlink reception within an uplink symbol or slot may be referred to as an SBFD resource. In addition, a symbol in which a downlink subband is configured within an uplink symbol may be referred to as an SBFD symbol.

As used herein, a band available for downlink channel or signal reception, except for an uplink subband, is referred to as a downlink subband for the sake of convenience. A UE may be configured with a maximum of one uplink subband for one symbol. A UE may be configured with a maximum of two downlink subbands for one symbol. For example, the UE may be configured with one of {uplink subband, downlink subband}, {downlink subband, uplink subband}, or {first downlink subband, uplink subband, second downlink subband} in the frequency domain.

FIG. 12 illustrates an example of an SBFD configuration according to an embodiment of the disclosure. More specifically, FIG. 12 is referenced for the description of this embodiment.

According to various embodiments, FIG. 12 is an example, and may be applied in the same manner to other embodiments with reference to FIG. 12. Referring to FIG. 12, the UE may have uplink symbols, downlink symbols, or flexible symbols configured therefor according to TDD configurations. Slots "D" may include downlink symbols in all symbols of the slots. Slots "U" may include uplink symbols in all symbols of the slots. Slots "S" may include slots other than slots "D" or "U". The UE may have a UL BWP 1220 configured therefor. The UE may have a UL subband 1210 configured in a DL symbol. It is assumed in this embodiment that a UL BWP includes 275 RBs and a UL subband includes 50 RBs, but this is only an example and is not limitative. It is assumed that no UL subband is not configured in the first slot. Therefore, the first slot may be referred to as a DL slot, and the symbol included therein may be referred to as a DL symbol. It is assumed that a UL subband is configured in the second, third, and fourth slots. Therefore, the second, third, and fourth slots may be referred to as SBFD slots, and symbols included therein may be referred to as SBFD symbols. The fifth slot is an uplink slot, and symbols included in the uplink slot may be referred to as uplink symbols.

According to various embodiments, the base station's antenna may include two antenna panels. The antenna panels may include one or multiple antenna elements. Although referred to as "antenna panel" for convenience, "panel" may be equivalently referred to as "antenna group", "panel group", or other terms. One of the two antenna panels may be referred to as a first panel, and the other may be referred to as a second panel. The two antenna panels may include the same number of antenna elements or may include different numbers of antenna elements. In addition, the same number of transceiver units (TxRUs) may be included in two antenna panels, or different numbers of TxRUs may be included therein. Although the disclosure will be described in terms of two antenna panels, the specific embodiments are not limited thereto and may obviously be applied to multiple antenna panels.

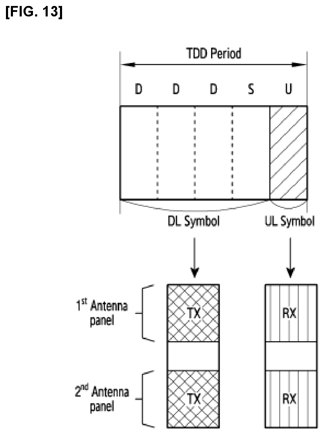

FIG. 13 illustrates an example of an antenna operation method in a TDD transmission scheme according to an embodiment of the disclosure. More specifically, referring to FIG. 13, the antenna structure of a base station for a TDD operation is determined as follows. In the case of a TDD configuration, the first four slots may include a downlink slot, and the last slot may include an uplink slot. The base station may use both antenna panels for downlink transmission in a downlink slot or downlink symbol. In addition, the base station may use both antenna panels for uplink reception in an uplink slot or uplink symbol.

According to FIG. 13, antenna panels used on symbols on which downlink transmission is possible may always be two identical panels. In addition, the antenna panels used on symbols on which uplink reception is possible may always be two identical panels. In addition, the base station may use the antenna panel used for downlink transmission for uplink reception. For example, the base station may use the same antenna panels during downlink transmission and uplink reception.

### [Antenna Operating Method for SBFD Operation]

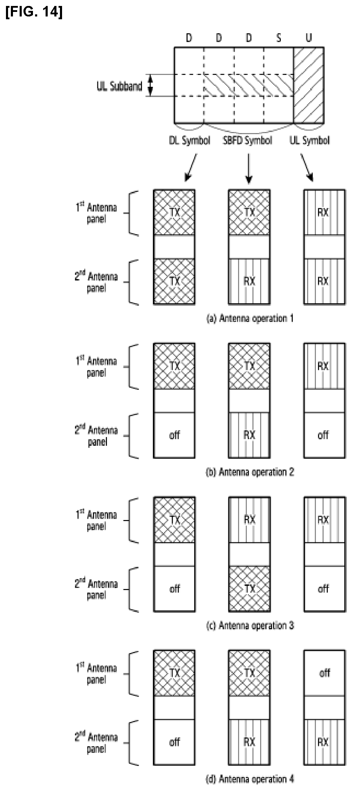

FIG. 14 illustrates an example of an antenna operation method in an SBFD transmission scheme according to an embodiment of the disclosure. More specifically, the antenna structure of a base station may be determined for an SBFD operation as follows.

According to an embodiment, the base station may perform an SBFD operation using two antenna panels in various methods. The antenna operation methods described below may refer to an antenna panel to be used according to the type or usage of a symbol in an SBFD operation.
- In a first antenna operation method, referring to FIG. 14A, when transmitting a downlink channel/signal on a downlink symbol/slot, the base station may use both the first and second antenna panels for downlink transmission. When receiving an uplink channel/signal on an uplink symbol/slot, the base station may use both the first panel and the second panel for uplink reception. When transmitting a downlink channel/signal and receiving an uplink channel/signal on an SBFD symbol/slot, the base station may use the first panel for downlink transmission and use the second panel for uplink reception. According to the first method, the number of antenna elements or antenna panels used for downlink transmission on a downlink symbol/slot may be greater than the number of antenna elements or antenna panels used for downlink transmission on an SBFD symbol/slot. In addition, the number of antenna elements or antenna panels used for uplink reception in an uplink symbol/slot may be greater than the number of antenna elements or antenna panels used for uplink reception in an SBFD symbol/slot. Therefore, the number of antenna elements or antenna panels used for downlink transmission may differ according to on which symbol the downlink channel/signal received by the UE has been transmitted, and the characteristics of signals transmitted by the base station may differ accordingly. Therefore, the UE needs to know which antenna mode is used by the base station (e.g., "antenna mode" refers to the number of panels/ the number of antenna elements used for downlink transmission according to the antenna operation method, the number of panels/the number of antenna elements used for uplink reception, etc.). This may be equally applied to the uplink. For example, according to on which symbol the uplink channel/signal transmitted by the UE has been transmitted, the number of antenna elements or antenna panels used for uplink transmission may differ, and the characteristics of signals received by the base station may differ accordingly.
- In a second antenna operation method, referring to FIG. 14B, when transmitting a downlink channel/signal on a downlink symbol/slot, the base station may use the first panel for downlink transmission. When transmitting an uplink channel/signal on an uplink symbol/slot, the base station may use the first panel for uplink reception. When transmitting a downlink channel/signal and receiving an uplink channel/signal on the SBFD symbol/slot, the base station may use the first panel for downlink transmission and use the second panel for uplink reception. Referring to the second antenna operation method, the number of antenna panels or antenna elements used by the base station for downlink transmission may be the same in all downlink symbols/slots or SBFD symbols/slots. However, the number of antenna panels or the antenna elements used by the base station for uplink reception may differ on each uplink symbol/slot or SBFD symbol/slot. Therefore, according to on which symbol the uplink channel/signal transmitted by the UE has been transmitted, the antenna elements used for uplink transmission may differ, and the characteristics of signals received by the base station may differ accordingly.

In a third antenna operation method, referring to FIG. 14C, when transmitting a downlink channel/signal on a downlink symbol/slot, the base station may use the first panel for downlink transmission. When transmitting an uplink channel/signal on an uplink symbol/slot, the base station may use the first panel for uplink reception. When transmitting a downlink channel/signal and receiving an uplink channel/signal on an SBFD symbol/slot, the base station may use the first panel for uplink reception and the second panel for downlink transmission. Referring to the third antenna operation method, the number of antenna panels or antenna elements used by the base station for uplink reception may be the same in all uplink symbols/slots or SBFD symbols/slots. However, the number of antenna panels or the antenna elements used by the base station for downlink transmission may differ on each downlink symbol/slot or SBFD symbol/slot. Therefore, according to on which symbol the downlink channel/signal received by the UE has been transmitted, the antenna elements used for downlink transmission may differ, and the characteristics of signals transmitted by the base station may differ accordingly.

In a fourth antenna operation method, referring to FIG. 14D, when transmitting a downlink channel/signal on a downlink symbol/slot, the base station may use the first panel for downlink transmission. When transmitting an uplink channel/signal on an uplink symbol/slot, the base station may use the second panel for uplink reception. When transmitting a downlink channel/signal and receiving an uplink channel/signal on an SBFD symbol/slot, the base station may use the first panel for downlink transmission and the second panel for uplink reception. Referring to the fourth antenna operation method, the number of antenna panels or antenna elements used by the base station for downlink transmission may be the same in all downlink symbols/slots or SBFD symbols/slots. In addition, the number of antenna panels or antenna elements used for uplink reception by the base station may be the same for all uplink symbols/slots or SBFD symbols/slots. Therefore, the UE may not require separate information regarding the antenna mode.

The above-described methods are merely examples of antenna operation methods for various SBFD operations, and various embodiments of the disclosure are not limited to the four antenna operation methods described above.

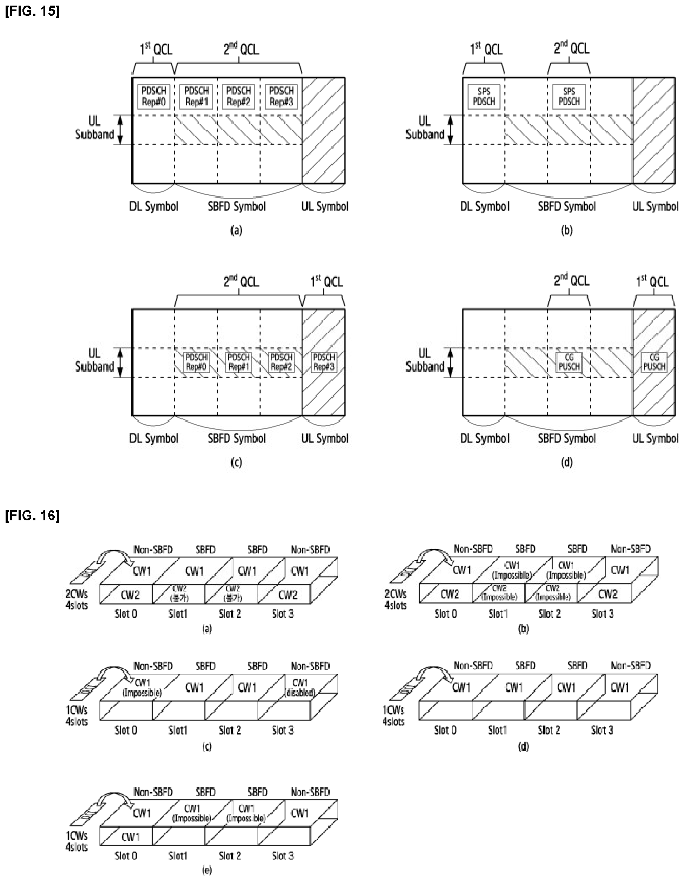

FIG. 15 illustrates an example of multiple quasi co-located (QCL) assumptions in an SBFD transmission scheme according to an embodiment of the disclosure.

According to various embodiments of the disclosure, when the UE receives a PDSCH or transmits a PUSCH through a single DCI format, respective signals may be scheduled for different symbol types. For example, referring to FIG. 15A, the UE may be instructed to repeatedly receive a PDSCH in multiple slots by a DCI format. The UE may be instructed to repeatedly receive a PDSCH in four slots through a DCI format. Among the same, the first PDSCH repeated transmission (PDSCH rep#0) may overlap with a downlink symbol, and the remaining three PDSCH repeated transmissions (PDSCH rep#1, PDSCH rep#2, and PDSCH rep#3) may overlap with an SBFD symbol. Through the preceding embodiments, the base station may differently configure the antenna panel used on the downlink symbol and the antenna panel used on the SBFD symbol.

For example, when the base station has two antenna panels, the base station may use both two antenna panels for downlink transmission on a downlink symbol, but may use only one of the two antenna panels for downlink transmission on an SBFD symbol. Therefore, beam-related information (for example, resource-related information) applied on the downlink symbol may differ from beam-related information applied on the SBFD symbol. The beam-related information may include quasi-co-located (QCL) information. The QCL information may be as follows.
- QCL typeA: {Doppler shift, Doppler spread, average delay, delay spread}
- QCL typeB: {Doppler shift, Doppler spread}
- QCL typeC: {Doppler shit, average delay}
- QCL typeD: {Spatial Rx parameter}

According to an embodiment, the base station should indicate a QCL assumption suitable for a downlink symbol and an SBFD symbol to the UE with regard to beams (or resources). A specific method to this end will be described hereinafter. According to a QCL assumption, the UE may determine a reception filter or a transmission filter. According to the QCL assumption, the UE may determine a reception beam or a transmission beam. In the following description, the QCL assumption may be replaced with and interpreted as a transmission configuration indicator (TCI), a reception filter/transmission filter, or a reception beam/transmission beam. In addition, it is obvious that, in the following, according to various embodiments of the disclosure, beams may be replaced with and expressed by resources which correspond to respective beams, and which are used to transmit/receive signals.

According to an embodiment, the base station may indicate two QCL assumptions to the UE through a DCI format. For the sake of convenience, the first QCL assumption may be a QCL assumption suitable for antenna panels used for downlink symbols, and the second QCL assumption may be a QCL assumption suitable for antenna panels used for SBFD symbols. In case that the UE receives a DCI format and the DCI format instructs the UE to repeatedly receive a PDSCH in multiple slots, the UE may receive a PDSCH overlapping with a downlink symbol by applying the first QCL assumption and may receive a PDSCH overlapping with an SBFD symbol by applying the second QCL assumption.

A specific method for indicating two QCL assumptions through a DCI format is as follows.
- The DCI format may include an N-bit field. The N-bit field may indicate a QCL assumption to the UE. The base station may configure a table having a row including a maximum of two QCL assumptions. A row of the table may include only one QCL assumption, and another row thereof may include two QCL assumptions. For example, in case that the UE receives an indication of a codepoint corresponding to a row including two QCL assumptions in the N-bit field, the UE may acquire two QCL assumptions. For reference, although one row of the table is described has having two QCL assumptions configured therefor, the base station may obviously configure two tables including one QCL assumption for the UE in a different method. For example, the UE may acquire two QCL assumptions from a row corresponding to the code point of the N-bit field in two tables.
- The DCI format may include an N-bit field. The N-bit field may indicate a QCL assumption to the UE. The base station may configure a table having a row including one QCL assumption. One QCL assumption may be a QCL assumption to be used for a first symbol type (e.g., a downlink symbol or an SBFD symbol). The base station may configure a QCL assumption used for a second symbol type (e.g., an SBFD symbol or a downlink symbol) corresponding to the QCL assumption used for the first symbol type through an upper layer signal. The UE may acquire a QCL assumption to be used for the first symbol type from a row of the table corresponding to a codepoint indicated by the N-bit field. In addition, the UE may acquire the QCL assumption to be used for the second symbol type corresponding to the indicated QCL assumption, according to the upper layer signal.

Although the above embodiment has been described with regard to the UE's PDSCH reception, the same method may obviously be applied to other channel reception.

Referring to FIG. 15B, in case that the UE receives a DCI format (DCI format 1_0, 1_1, or 1_2) for activating a semi-persistent scheduling (SPS) PDSCH, the UE may periodically receive a PDSCH. Some SPS PDSCHs may overlap with a downlink symbol, and other SPS PDSCHs may overlap with an SBFD symbol. Therefore, similarly to the above-described scheme in which one DCI format is used for repeated PDSCH reception, beam-related information applied to a downlink symbol and beam-related information applied to an SBFD symbol may include different information.

Referring to FIG. 15C, in case that the UE receives a DCI format for repeating transmission of a PUSCH, the UE should repeatedly transmit the PUSCH in multiple slots. Similarly to PDSCH repetition transmission, some of the repeatedly transmitted PUSCHs may overlap with an uplink symbol, and some others may overlap with an SBFD symbol. Beam-related information applied to the uplink symbol and beam-related information applied to the SBFD symbol may be different, thereby requiring multiple QCL assumptions.

Referring to FIG. 15D, in case that the UE receives a DCI format (DCI format 0_0, 0_1, or 0_2) for activating a configured grant (CG) PUSCH, the UE may periodically transmit a PUSCH. Similarly to SPS PDSCH reception, some CG PUSCHs may overlap with an uplink symbol, and some other may overlap with an SBFD symbol. Beam-related information applied to the uplink symbol and beam-related information applied to the SBFD symbol may be different, thereby requiring multiple QCL assumptions.

For reference, the above-described embodiment may also be applied to DCI for scheduling one PDSCH or one PUSCH.

### <Transmission/Reception Configured by Upper Layer>

The various examples in FIG. 15 above may include a case in which transmission or reception is indicated by a DCI format. In addition, there may be a channel or signal for which transmission or reception is indicated through an upper layer. For example, signals indicated through the upper layer may include a PDCCH, CSI-RS, and the like received by the UE in the downlink, or may include an SRS and the like transmitted by the UE in the uplink. Some of channel or signals for which transmission or reception is indicated through the upper layer may overlap with an SBFD symbol, and some other may overlap with a symbol (e.g., a downlink symbol or an uplink symbol) other than the SBFD symbol. In this case, when configuring the above-described channel/signal, the base station may include a maximum of two QCL assumptions.

According to an embodiment, in the case of a PDCCH, the base station and the UE may use different QCL assumptions according to the type of the search space.

According to an embodiment, the type of the search space may include at least the following.
- Type0 common search space: includes a PDCCH that schedules a PDSCH for transferring SIB1
- Type0A common search space: includes a PDCCH that schedules a PDSCH for transferring other system information blocks excluding SIB1
- Type1 common search space: includes a PDCCH for cell random access
- Type2 common search space: includes PDCCHs related to paging
- Type3 common search space: includes a group common PDCCH

Some search spaces may include a PDCCH that transfers main information of the system. For example, Type0, 0A, 1, and 2 may be determined to be PDCCHs for transferring main information of a cell. The UE may always use an antenna configuration corresponding to a downlink symbol, regardless of the symbol type on a symbol for receiving a PDCCH. This is because the antenna configuration corresponding to a downlink symbol may ensure higher downlink coverage and reception signal quality than the antenna configuration corresponding to an SBFD symbol.

According to an embodiment, in the case of a CSI-RS, different QCL assumptions may be used according to the usage of the CSI-RS.

For example, in case that the UE uses a QCL assumption for a tracking RS (TRS) usage among a CSI-RS, higher downlink coverage and received signal quality are required. Therefore, identically to the PDCCH for transferring main information of the system described above, a symbol in which a CSI-RS used for TRS usage is configured may be based on the antenna configuration corresponding to a downlink symbol, regardless of the symbol type.

### [MIMO Transmission Method for SBFD Operation]

### <Separate MIMO parameter configuration and PDSCH/PUSCH transmission method>

According to the above description, the downlink QCL assumption of the UE may be different on a downlink symbol and on an SBFD symbol. Therefore, the UE may acquire both a first QCL assumption for a downlink symbol and a second QCL assumption for an SBFD symbol from a DCI format or an upper layer signal. The UE may receive a downlink channel or signal by using a first reception filter or a first reception beam determined according to the first QCL assumption on a downlink symbol. The UE may receive a downlink channel or a signal by using a second reception filter or a second reception beam determined according to the second QCL assumption on an SBFD symbol.

According to an embodiment, the channel between the base station and the UE when the UE receives a signal on a downlink symbol by using a first reception beam may be referred to as a first channel, and the channel between the base station and the UE when the UE receives a signal on an SBFD symbol by using a second reception beam may be referred to as a second channel. For reference, the number of antenna panels used by the base station on a downlink symbol may be different from the number of antenna panels used on an SBFD symbol. Therefore, the first channel and the second channel may have different characteristics.

The maximum number of MIMO layers of the first channel and the second channel may be different from each other. For example, in the case of the first channel, the base station may use more antenna panels and may indicate a first QCL assumption corresponding thereto to the UE, thereby having a higher channel rank. In the case of the second channel, the base station may use fewer antenna panels and may indicate a second QCL assumption corresponding thereto to the UE, thereby having a lower channel rank. Therefore, the base station may indicate different maximum numbers of MIMO layers for the first channel and the second channel to the UE.

According to an embodiment of the disclosure, the UE may have the maximum number of MIMO layers (maxMIMO-Layers) for downlink symbols configured therefor. In addition, the UE may have the maximum number of MIMO layers (maxMIMO-Layers) for SBFD symbols configured therefor. If the maximum number of MIMO layers for SBFD symbols is not configured, the UE may determine that the maximum number of MIMO layers for downlink symbols is the maximum number of MIMO layers for SBFD symbols. As an example, the maximum number of MIMO layers for SBFD symbols configured for the UE may be smaller than or equal to the maximum number of MIMO layers for downlink symbols. This is because the number of antenna panels used by the base station in an SBFD symbol may be small, and the channel rank of the second channel may be low accordingly.

According to an embodiment, when receiving a downlink channel or signal (e.g., a PDSCH) on a downlink symbol, the UE may receive the signal, based on the maximum number of MIMO layers for the downlink symbol. In addition, when identifying the fields of DCI for scheduling a downlink channel/signal (e.g., PDSCH) on a downlink symbol, the fields of DCI may be identified based on the maximum number of MIMO layers.

According to an embodiment, when receiving a downlink channel or signal (for example, PDSCH) on an SBFD symbol, the UE may receive the signal, based on the maximum number of MIMO layers for the SBFD symbol. In addition, when interpreting fields of DCI for scheduling a downlink channel or signal (e.g., PDSCH) on an SBFD symbol, the UE may interpret the fields of the DCI, based on the maximum number of MIMO layers.

According to an embodiment, the UE may have the maximum number of codewords (maxNrofCodeWordsScheduledByDCI) that may be included in a PDSCH configured by the base station. The maximum number of codewords may be one of 1 or 2. If the maximum number of codewords is 1, the PDSCH may include one codeword. If the maximum number of codewords is 2, the PDSCH may include a maximum of two codewords. According to an embodiment, if the maximum number of codewords is 2, the actual number of codewords included in the PDSCH may be determined according to a combination of values of the field of the DCI that schedules the PDSCH. According to an embodiment, in case that the number of downlink MIMO layers of the UE is larger than 4, the PDSCH may include two codewords, and in case that the number of downlink MIMO layers of the UE is 4 or smaller, the PDSCH may include one codeword.

According to an embodiment, the DCI may include a first MCS field, a first RV field, or a first NDI field for the first codeword. In addition, the DCI may include a second MCS field, a second RV field, or a second NDI field for the second codeword. The number of codewords included in the PDSCH may be determined by a value combination of second MCS fields, second RV fields, or second NDI fields for the second codeword. If the second MCS field for the second codeword has a specific value (e.g., IMCS=26), and if the second RV field has a specific value (e.g., rvid=1), the UE may determine that the second codeword is inactive, and the PDSCH may include only the first codeword.

According to an embodiment of the disclosure, the maximum number of codewords for a PDSCH received in a downlink symbol may be configured for the UE. In addition, the maximum number of codewords for an SBFD symbol may be configured for the UE. In case that the maximum number of codewords for an SBFD symbol is not configured, the UE may determine that the maximum number of codewords for the downlink symbol is the maximum number of codewords for the SBFD symbol. As an example, the maximum number of codewords for the SBFD symbol configured for the UE may be less than or equal to the maximum number of codewords for the downlink symbol. This is because the number of antenna panels used by the base station in the SBFD symbol may be small, and the channel rank of the second channel may accordingly be low.

According to an embodiment, the UE may be instructed to receive a repeat of PDSCH or SPS PDSCH through one DCI. Some of the repeat of PDSCH or SPS PDSCHs may overlap with a downlink symbol, and remaining some may overlap with an SBFD symbol. Assuming that the maximum number of codewords of a PDSCH received in a downlink symbol is 2 and the maximum number of codewords of a PDSCH received in an SBFD symbol is 1, the UE needs to determine the number of codewords of the PDSCH received on the downlink symbol and the number of codewords of the PDSCH received on the SBFD symbol from one DCI. Hereinafter, a specific method for determining the number of codewords will be described.

According to the first method, one DCI received by the UE may always expect to schedule a PDSCH including one codeword. More specifically, in case that a PDSCH scheduled by DCI received by the UE is scheduled only on a downlink symbol, the scheduled PDSCH may include codewords based on a value corresponding to the maximum number of codewords for downlink symbols. For example, in case that the value of the maximum number of codewords for downlink symbols is 2, the PDSCH may include a maximum of 2 codewords. According to an embodiment, the number of codewords actually included in the PDSCH may differ according to the combination of fields of the DCI. In case that a PDSCH scheduled by DCI received by the UE is scheduled on at least one SBFD symbol, the scheduled PDSCH may include codewords based on a value corresponding to the maximum number of codewords for SBFD symbols. For example, in case that the value of the maximum number of codewords for SBFD symbols is 1, the PDSCH may always include one codeword.

According to various embodiments, the first method described above may refer to a case in which the maximum number of codewords for SBFD symbols is smaller than the maximum number of codewords for downlink symbols. The first method may generally be as follows. According to an embodiment, in case that a PDSCH scheduled by DCI received by the UE is scheduled only for one symbol type, the scheduled PDSCH may include codewords based on a value corresponding to the maximum number of codewords corresponding to one symbol type. For example, if one symbol type is a downlink symbol type, the number of codewords included in the PDSCH may be determined based on the maximum number of codewords for downlink symbols. If one symbol type is an SBFD symbol type, the number of codewords included in the PDSCH may be determined based on the maximum number of codewords for SBFD symbols. According to an embodiment, in case that the PDSCH scheduled by DCI received by the UE is scheduled only for two symbol types, the scheduled PDSCH may be determined based on the minimum value of the maximum number of codewords corresponding to the first symbol type and the maximum number of codewords corresponding to the second symbol type.

According to various embodiments, the DCI may include a first MCS field, a first RV field, or a first NDI field for the first codeword. If the maximum number of codewords is 2, the DCI field may include a second MCS field, a second RV field, or a second NDI field for the second codeword. Therefore, the DCI may have a different length (payload size) according to the maximum number of codewords. According to an embodiment, the maximum number of codewords in the first method may be determined after DCI interpretation. For example, the UE may determine the type of symbols for which a PDSCH is scheduled by interpreting DCI. Therefore, an assumption for determining the DCI length may be necessary before interpreting the DCI. In a method of the disclosure, the UE may determine the DCI length, based on the maximum value of the maximum number of codewords corresponding to the first symbol type and the maximum number of codewords corresponding to the second symbol type. For example, if the maximum number of codewords for downlink symbols is 2, and the maximum number of codewords for SBFD symbols is 1, the DCI length may be determined by assuming that the maximum number of codewords is 2. That is, the DCI may include a first MCS field, a first RV field, or a first NDI field for the first codeword, and a second MCS field, a second RV field, or a second NDI field for the second codeword.

According to various embodiments of the disclosure, the length of DCI may be determined according to the maximum value of the maximum number of codewords corresponding to the first symbol type and the maximum number of codewords corresponding to the second symbol type. The PDSCH scheduled by DCI, in case of overlapping with two symbol types, may be determined based on the minimum value of the maximum number of codewords corresponding to the first symbol type and the maximum number of codewords corresponding to the second symbol type. For example, the length of DCI may be determined based on the assumption that the maximum number of codewords is 2, but the DCI may schedule a PDSCH including only one codeword. According to various embodiments, in this case, interpretation of DCI by the UE may be as follows.
- The UE may ignore the second MCS field, the second RV field, or the second NDI field for the second codeword. For example, regardless of what value is indicated in the second MCS field, the second RV field, or the second NDI field, the UE may determine that only one codeword is scheduled when the PDSCH is scheduled across two symbol types.
- The UE may receive a PDSCH scheduled across two symbol types upon receiving an indication that the above-described codeword has been deactivated according to a combination of the second MCS field, the second RV field, and the second NDI field for the second codeword. On the other hand, the UE may receive no PDSCH scheduled across two symbol types upon receiving an indication that the above-described codeword has been activated according to a combination of the second MCS field, the second RV field, and the second NDI field for the second codeword. For example, the UE may determine that the DCI is invalid. When the DCI is determined to be invalid, the UE may not apply the information indicated in the DCI. This is because the DCI indicated that two codewords have been activated, but the PDSCH scheduled by the DCI is scheduled across two symbol types, and may accordingly include only one codeword.

According to various embodiments, in a second method, in case that a PDSCH scheduled by DCI is scheduled across two symbol types, the maximum number of codewords included in the PDSCH may be the same as the maximum number of codewords configured for the symbol types. For example, with regard to a PDSCH scheduled for a downlink symbol, the maximum number of codewords may be determined based on the maximum number of codewords for the downlink symbol, and with regard to a PDSCH scheduled for an SBFD symbol, the maximum number of codewords may be determined based on the maximum number of codewords for the SBFD symbol. In other words, a PDSCH scheduled for a downlink symbol may include a maximum of two codewords, and a PDSCH scheduled for an SBFD symbol may include a maximum of one codeword.

According to an embodiment, according to the second method, the UE may expect a PDSCH including a maximum of two codewords when receiving a PDSCH in a downlink symbol, but may expect a PDSCH including a maximum of one codeword when receiving a PDSCH in an SBFD symbol. If the DCI is related to PDSCH repetitive transmission, a PDSCH including a maximum of two codewords may be received in a downlink symbol, but a PDSCH including only one codeword among two codewords may be received in an SBFD symbol. If the DCI schedules an SPS PDSCH or schedules a multi-PDSCH, a PDSCH including a maximum of two codewords may be received in the downlink symbol, and a PDSCH including a maximum of one codeword may be received in the SBFD symbol.

According to an embodiment, when following the second method, if the maximum number of codewords is set to 2 for at least one symbol type among the two symbol types, the DCI may include a first MCS field, a first RV field, or a first NDI field for a first codeword, and a second MCS field, a second RV field, or a second NDI field for a second codeword. The DCI may be interpreted as follows.
- In case that all PDSCHs scheduled by DCI overlap with one symbol type and the maximum number of codewords of one symbol type is 2, the UE may acquire scheduling information of the first codeword, based on the first MCS field, the first RV field, or the first NDI field for the first codeword, and may acquire scheduling information of the second codeword, based on the second MCS field, the second RV field, or the second NDI field for the second codeword. In addition, one of the two codewords may be deactivated.
- In case that all PDSCHs scheduled by DCI overlaps with all one symbol type and the maximum number of codewords of one symbol type is one, and in case that a PDSCH scheduled by DCI overlaps with two symbol types and the maximum number of codewords of at least one symbol type is one, the UE may acquire scheduling information of the first codeword, based on a first MCS field, a first RV field, or a first NDI field for the first codeword. In case that the DCI includes a second MCS field, a second RV field, or a second NDI field for the second codeword, the UE may ignore the second MCS field, the second RV field, or the second NDI field for the second codeword included in the DCI. According to an embodiment, information regarding the second codeword may be used when all PDSCHs scheduled by DCI overlaps with one symbol type, and when the maximum number of codewords of one symbol type is 2.

According to various embodiments, in a third method, the UE may assume that DCI may always schedules a PDSCH on symbols having the same maximum number of codewords. More specifically, in case that DCI schedules a PDSCH on symbols having different maximum numbers of codewords, the UE may determine that the DCI is invalid. For example, in case that a PDSCH scheduled by DCI overlaps with a downlink symbol and an SBFD symbol, and in case that one maximum codeword or two maximum codewords are configured identically for the downlink symbol and the SBFD symbol, the UE may receive the PDSCH. On the other hand, in cases that two maximum codewords are configured for the downlink symbol and one maximum codeword is configured for the SBFD symbol, the UE may not receive the PDSCH scheduled by the DCI.

According to various embodiments, in a fourth method, the UE may not receive a PDSCH on symbols wherein DCI does not have the same maximum number of codewords. More specifically, the UE may determine the number of codewords included in a PDSCH, based on the DCI. If the number of codewords is 2, the UE may not receive a PDSCH in a symbol type for which the maximum number of codewords is configured to be 1. The PDSCH may be received in a symbol type for which the maximum number of codewords is configured to be 2. If the number of codewords is 1, the UE may receive a PDSCH only in the symbol type for which the maximum number of codewords is configured to be 1, as a first operation. The UE may receive a PDSCH in a symbol type for which the maximum number of codewords is 1 or larger, as a second operation.

FIG. 16 illustrates an example of transmission according to a multiple-input and multiple-output (MIMO) parameter according to an embodiment of the disclosure.

More specifically, referring to FIG. 16A and FIG. 16B, DCI indicates that the PDSCH includes two codewords and indicates reception of the PDSCH on four slots. Referring to FIG. 16C, FIG. 16D, and FIG. 16E, the DCI indicates that the PDSCH includes one codeword and indicates reception of the PDSCH on four slots. In FIG. 16, the PDSCH may include a maximum of two codewords in a downlink symbol and a maximum of one codeword in an SBFD symbol.

According to an embodiment, FIG. 16A corresponds to the UE's operation according to the second method described above. Since the DCI includes two codewords, a PDSCH including two codewords may be received in a downlink symbol (slot 0 and slot 3) in which a PDSCH including two codewords may be received, and a PDSCH including one codeword may be received in an SBFD symbol (slot 1 and slot 2) in which a PDSCH including one codeword may be received.

According to an embodiment, FIG. 16B, FIG. 16C, and FIG. 16D correspond to the UE's operation according to the fourth method. Referring to FIG. 16B, in case that the DCI received by the UE schedules two codewords, the UE may receive the PDSCH only in symbol types in which two codewords may be scheduled. For example, the UE may receive a PDSCH only in a downlink symbol. Therefore, the UE may receive a PDSCH including two codewords in slot 0 and slot 3. In addition, the UE may not receive a PDSCH in the SBFD symbol. Referring to FIG. 16C, in case that the DCI received by the UE schedules one codeword, the UE may receive a PDSCH only in an SBFD symbol (slot 1 and slot 2) for which the maximum number of codewords is configured to be 1. In addition, the UE may not receive a PDSCH in a downlink symbol (slot 0 and slot 3) for which the maximum number of codewords is configured to be 2 (first operation). Referring to FIG. 16D, in case that the DCI received by the UE schedules one codeword, the UE may receive a PDSCH in an SBFD symbol (slot 1 and slot 2) for which the maximum number of codewords is configured to be 1 and in a downlink symbol (slot 0 and slot 3) for which the maximum number of codewords is configured to be larger than 1 (second operation).

According to an embodiment, FIG. 16E corresponds to the UE' operation according to the third method. The UE may receive a PDSCH on symbols having the same maximum number of codewords configured therefor. The UE may receive a PDSCH only in a symbol type having the same number of codewords as the maximum number of codewords of one symbol type (e.g., a symbol type overlapping with the first PDSCH in the time domain) scheduled by DCI. Referring to FIG. 16E, since the maximum number of codewords of one symbol type (e.g., a symbol type overlapping with the first PDSCH in the time domain) scheduled by the DCI is 2, the UE may receive a PDSCH on symbols (slot 0 and slot 3), the maximum number of codewords is 2. For reference, the above method may be applied regardless of the number of codewords scheduled by DCI. For example, even if the DCI schedules one codeword, the UE may receive a PDSCH only in symbols, the maximum number of codewords is 2.

The above description has been based on a PDSCH, but various embodiments of the disclosure may also be applied to a PUSCH. In this case, downlink symbols may be replaced by uplink symbols and interpreted as such. When applied to a PUSCH, the maximum number of codewords includable in the PUSCH may be determined by the maximum uplink rank (maxRank) or the maximum uplink MIMO layer number (maxMIMO-Layer). For example, a first maximum uplink rank or a first maximum uplink MIMO layer number may be configured for uplink symbols, and a second maximum uplink rank or a second maximum uplink MIMO layer number may be configured for SBFD symbols. If the maximum uplink rank or the maximum uplink MIMO layer number exceeds 4, the maximum number of codewords may be 2, and if the maximum uplink rank or the maximum uplink MIMO layer number is 4 or less, the maximum number of codewords may be 1.

As described above, the first maximum number of MIMO layers (maxMIMO-Layers) or the first maximum number of codewords (maxNrofCodeWordsScheduledByDCI) may be configured on a downlink symbol, and the second maximum number of MIMO layers (maxMIMO-Layers) or the second maximum number of codewords (maxNrofCodeWordsScheduledByDCI) may be configured on an SBFD symbol. The maximum number of MIMO layers and the maximum number of codewords are provided as an example, and other MIMO configuration-related parameters may be configured for the downlink symbol and the SBFD symbol, respectively. For example, information regarding the antenna port field of downlink DCI (e.g., DCI format 0_1, 1_1, 2_1, etc.) and information regarding the PRB bundling size indicator field may be configured for the downlink symbol and the SBFD symbol, respectively.

As described above, in the uplink symbol, a first maximum number of MIMO layers (maxMIMO-Layers) or a first maximum uplink rank (maxRank) may be configured, and in the SBFD symbol, a second maximum number of MIMO layers (maxMIMO-Layers) or a second maximum uplink rank (maxRank) may be configured. The maximum number of MIMO layers and the maximum uplink rank is only an example, and other MIMO configuration-related parameters may be configured for the uplink symbol and the SBFD symbol, respectively. For example, information related to the SRS resource set indicator field of uplink DCI (DCI format 0_0, 1_0, 2_0, etc.), information related to the SRS resource indicator field, information related to the precoding information and number of layers field, and information related to the antenna port field may be configured for the uplink symbol and the SBFD symbol, respectively.

### <Separate MIMO Parameter Configuration and UE Reporting>

Hereinafter, a method and an operation for receiving a PDSCH on a downlink symbol and an SBFD symbol will be described, but various embodiments of the disclosure may obviously be interpreted as a method and an operation for transmitting a PUSCH on an uplink symbol and an SBFD symbol. For example, in the following description, a downlink symbol may be replaced with an uplink symbol, a PDSCH may be replaced with a PUSCH, and reception may be replaced with transmission.

As described above, the first QCL configuration of the downlink symbol and the second QCL configuration in the SBFD symbol may be identical to or different from each other. When receiving a PDSCH in the downlink, the UE may use a reception filter corresponding to the QCL configuration. Therefore, when receiving a PDSCH in a downlink symbol, the UE may receive the same using a first reception filter corresponding to the first QCL configuration, and when receiving a PDSCH in an SBFD symbol, the UE may receive the same using a second reception filter corresponding to the second QCL configuration. However, in order to perform the above-described operation, the UE needs to change the reception filter corresponding to the QCL configuration between the downlink symbol and the SBFD symbol.

According to an embodiment, a reception filter corresponding to the above-described QCL configuration may include an analog filter or a digital filter. In case that the reception filter is an analog filter, it may require a sufficient amount of time to change the first reception filter and the second reception filter. The time (e.g., a filter transition time) required for the above-described filter change may vary depending on the UE's implementation. Therefore, the base station may need to perform scheduling in consideration of the above-described filter change time. Hereinafter, methods for the above-described requirements will be described.

According to various embodiments of the disclosure, the UE may report UE capability to the base station in the initial cell access process. The UE capability report may include at least one of the following pieces of information.
- As the first information, the UE capability report may include information regarding whether different QCL configurations are possible for the downlink symbol and the SBFD symbol. According to an embodiment, in case that the UE reports, through the UE capability report, that different QCL configurations are not possible, the UE may expect that only the same QCL will always be configured for the downlink symbol and the SBFD symbol by the base station. Therefore, the first QCL configuration and the second QCL configuration in the UE capability report may always be identical. According to an embodiment, in case that the UE reports, through the UE capability report, that different QCL configurations are possible, the UE may expect that the base station will configure the same QCL or different QCLs with regard to the downlink symbol and the SBFD symbol. Therefore, the first QCL configuration and the second QCL configuration may be identical to or different from each other.
- As the second information, the UE capability report may include a minimum filter change time between the first QCL configuration and the second QCL configuration. According to an embodiment, in case that the UE reports a minimum filter change time through the UE capability report, the UE may not expect a change between the first QCL configuration and the second QCL configuration to be performed within a time smaller than the minimum filter change time. The minimum filter change time may be reported based on an absolute time (e.g., in units of ms or us), or reported based on a reference subcarrier spacing and the number of symbols, or reported based on a reference subcarrier spacing and the number of slots. The reference subcarrier spacing may include 15kHz, 30kHz, 60kHz, 120kHz, 480kHz, or 960kHz. According to an embodiment, the UE may report multiple filter change times according to the reference subcarrier spacing through UE capability reporting. For example, the number of first symbols (or the number of first slots) in case that the reference subcarrier spacing is 15kHz or the number of second symbols (or the number of second slots) in case that the reference subcarrier spacing is 30kHz may be reported. The UE may report, through the UE report, that there is no need for a filter change time. For example, in case that the time required for a filter change is very small, the UE may receive or transmit signals with different QCL configurations without a filter change time. According to an embodiment, in a method for reporting that there is no need for a filter change time, the UE may explicitly report this through a UE capability report, or report this by not including the second information in the UE capability. The UE may report one of the first filter change time and the second filter change time through the UE report. The first filter change time and the second filter change time may be values previously agreed upon by the base station and the UE. Although the description is based on the first filter change time and the second filter change time, it is obvious that the UE may report one of *N* filter change times in general.
- As the third information, the UE may report whether repeated PDSCH reception (or repeated PUSCH transmission) is possible only in the same QCL configuration, or whether repeated PDSCH reception (or repeated PUSCH reception) is possible in different QCL configurations. According to an embodiment, in case that the UE reports, through the UE capability report, that repeated PDSCH reception (repeated PUSCH transmission) is possible only in the same QCL configuration, the UE may receive repeated PDSCHs corresponding to only one QCL configuration during repeated PDSCH reception (repeated PUSCH transmission), and may not receive repeated PDSCHs corresponding to another QCL configuration. According to an embodiment, in case that the UE reports that repeated PDSCH reception (repeated PUSCH transmission) is possible in different QCL configurations through the UE capability report, the UE may receive the PDSCHs corresponding to the first QCL configuration during repeated PDSCH reception (repeated PUSCH transmission), and may also receive PDSCHs corresponding to the second QCL configuration. Hereinafter, a more specific method will be described.

According to various embodiments, the QCL configuration described above may obviously be interpreted as a transmission configuration indicator (TCI) state, a reception beam (e.g., in case of downlink reception description), a transmission beam (e.g., in case of uplink transmission description), or a corresponding resource (e.g., in case of downlink reception description, an SSB or CSI-RS, or in case of uplink transmission description, an SRS).

According to various embodiments, the above-described QCL configuration may be replaced with other MIMO parameters and applied as such. For example, the first QCL configuration may obviously be replaced by and applied as the first MIMO parameter (e.g., maxMIMO-Layers, maxNrofCodeWordsScheduledByDCI, or maxRank), and the second QCL configuration may be replaced by and applied as the second MIMO parameter.

### <Separate MIMO Parameter Configuration Constraints>

As described above, the first QCL configuration of the downlink symbol and the second QCL configuration in the SBFD symbol may be identical to or different from each other. When receiving a PDSCH in the downlink, the UE may use a reception filter corresponding to the QCL configuration. Therefore, when receiving a PDSCH in a downlink symbol, the UE may receive the PDSCH by using a first receiving filter corresponding to the first QCL configuration, and when receiving a PDSCH in an SBFD symbol, the UE may receive the PDSCH by using a second receiving filter corresponding to the second QCL configuration. There may be a relationship or constraint in the first QCL configuration and the second QCL configuration. Hereinafter, the relationship or constraint between the two configurations described above will be specifically described in the disclosure.

For the sake of convenience, the QCL configuration may be referred to as a TCI state according to various embodiments.

According to an embodiment, as many first TCI states as *N* may be configured for PDSCH reception (or PUSCH transmission) in a downlink (or uplink) symbol. The *N* first TCI states may be configured by the base station through an upper layer signal (e.g., an RRC signal). In addition, at least one of one, some, or all of the *N* first TCI states may be changed through a MAC-CE signal. Changing a TCI state, as used herein, may mean that the index corresponding to the TCI state is maintained, and a downlink resource (e.g., SSB or CSI-RS) or uplink resource (e.g., SRS) corresponding to the TCI state is changed.

In an embodiment of the disclosure, *N* second TCI states may be configured for PDSCH reception (or PUSCH transmission) in an SBFD symbol.
- In the first method, the UE may assume that *N* second TCI states in the SBFD symbol are identical to the *N* first TCI states of the downlink symbol (or uplink symbol). For example, the UE may determine the second TCI states of the SBFD symbols without receiving a separate upper layer signal (e.g., an RRC signal) from the base station. The first TCI states may have unique indices, respectively. The unique indices may be determined to be 0, 1, ..., *N*-1. The second TCI states may may have unique indices, respectively. The unique indices may be determined to be 0, 1, ..., *N*-1. According to various embodiments of the disclosure, a first TCI state and a second TCI state regarding the same index (for example, index 0) may be different from each other.

If one, some, or all of the first TCI states are changed through a MAC-CE signal, such a change may be equally applied to the second TCI states. For example, the MAC-CE signal may change the first TCI states and the second TCI states at the same time. In another method, the MAC-CE signal may include first information regarding one, some, or all of the first TCI states being changed by a MAC-CE signal, and second information regarding one, some, or all of the second TCI states being changed by a MAC-CE signal. Obviously, the first information and the second information may be always included together in a MAC-CE signal, or only one of the two pieces of information may be included in the MAC-CE signal. Upon receiving a MAC-CE signal including first information, the UE may change one, some, or all of the first TCI states. Such a change may not be applied to the second TCI state. Upon receiving a MAC-CE signal including second information, the UE may change one, some, or all of the second TCI states. Such a change may not be applied to the first TCI state. For example, according to the MAC-CE signal, the first TCI states and the second TCI states may be different from each other.
- In a second method, the UE may assume that *N* second TCI states in the SBFD symbol and the *N* first TCI states of the downlink symbol (or uplink symbol) are different from each other. The UE may have *N* second TCI states configured in an SBFD symbol through an upper layer signal (RRC signal). For example, the UE may have *N* first TCI states in a downlink symbol (or an uplink symbol) and *N* second TCI states in an SBFD symbol configured separately through an upper layer signal (RRC signal). The first TCI states may have unique indices, respectively. The unique indices may include 0, 1, ..., *N*-1. The second TCI states may may have unique indices, respectively. The unique indices may include 0, 1, ..., *N*-1. According to various embodiments of the disclosure, a first TCI state and a second TCI state regarding the same index (for example, index 0) may be different from each other.
- In a third method, the UE may assume that *N* second TCI states in the SBFD symbol are partially identical to or partially different from *N* first TCI states of the downlink symbol (or uplink symbol). The first TCI states may have unique indices, respectively. The unique indices may include 0, 1, ..., *N*-1. The second TCI states may may have unique indices, respectively. The unique indices may include 0, 1, ..., *N*-1. According to various embodiments of the disclosure, the first TCI state and the second TCI state may be identical with regard to an index. The first TCI state and the second TCI state may be different from each other with regard to another index. The base station may configure the UE, through an upper layer signal (RRC signal), such that at least one of the *N* second TCI states in the SBFD symbol may have the same index as the first TCI states on the downlink symbol (or uplink symbol). For example, if "0" is included in a configured index, the second TCI state having an index of "0" among the second TCI states may be identical to the first TCI state regarding the same index (index "0"). The base station may configure a second TCI state regarding the above-mentioned index for the UE, through an upper layer signal (RRC signal), such that at least one of the *N* second TCI states in the SBFD symbol may have an index different from the first TCI states on the downlink symbol (or uplink symbol). For example, if "1" is included in an index, the second TCI state corresponding to index "1" among the second TCI states may be configured by an upper layer signal, and this may differ from the first TCI state corresponding to index "1".

According to an embodiment, in case that a MAC-CE signal changes the TCI state of an index having first and second TCI states configured to be identical, such a change may be applied identically to the first TCI state and the second TCI state.

According to an embodiment, the UE may receive DCI that schedules PDSCH reception (or PUSCH transmission). The DCI received by the UE may include a TCI field. The length of the TCI field may be determined based on *N*. More specifically, the length of the TCI field may be determined as ceil(log2(N)).

According to an embodiment of the disclosure, as many second TCI states as *M* may be configured for PDSCH reception (or PUSCH transmission) in an SBFD symbol. *M* may be a different number from *N*, or may be a natural number smaller than *N*.

According to various embodiments, *M* second TCI states may be determined as follows.

According to an embodiment, the UE may use *M* of the *N* first TCI states as second TCI states. For example, the second TCI states may be configured as a subset of the first TCI states. The *M* second TCI states may be identical to first TCI states of a specific index. The specific index may include 0, 1, ..., *M*-1. For example, the *M* second TCI states may be identical to first TCI states having indices 0, 1, ..., *M-*1. The specific index may be configured by the base station. The UE may receive *M* indices, and may use a first TCI state corresponding to the received index with regard to a second TCI state.

According to an embodiment, the UE may have *K* additional second TCI configurations configured by the base station. The *K* additional TCI states may include TCI states different from the first TCI states. Therefore, the number of second TCI configurations configured for the UE may be *M*+*K*.

According to an embodiment, the UE may receive DCI that schedules PDSCH reception (or PUSCH transmission). The DCI received by the UE may include a TCI field. The length of the TCI field may be determined based on the number (*N*) of first TCI states and the number (*M* or *M+K*) of second TCI states. More specifically, the length of the TCI field may be determined based on the larger value among the number (*N*) of first TCI states and the number (*M* or *M+K*) of second TCI states. The length of the TCI field may be determined as ceil(log2(max{N,M})) or ceil(log2(max{N,M+K})).

According to various embodiments, the UE may have second TCI states configured for PDSCH reception (or PUSCH transmission) on an SBFD symbol. Due to the mobility of the UE or a channel change, one or some of the configured second TCI states may cause self-interference or inter-base station interference. Therefore, the UE may disable one or some of the configured second TCI states. As used herein, disabling a TCI state may mean that the UE does not perform PDSCH reception (or PUSCH transmission) based on the TCI state. According to an embodiment, even when the UE is scheduled to perform PDSCH reception (or PUSCH transmission) according to the TCI state, the UE may not perform the PDSCH reception (or PUSCH transmission) and may cancel (or drop or skip) the same. Alternatively, the UE may not expect to be scheduled to receive a PDSCH (or transmit a PUSCH) according to the TCI state. That is, upon receiving DCI that schedules PDSCH reception (or PUSCH transmission) according to a TCI state, the UE may determine that the received DCI is invalid, and may not perform the operations indicated by the DCI. Such a sequence of processes may be expressed as discarding the DCI. According to an embodiment, the base station may indicate second TCI states to be disabled to the UE. The second TCI states to be disabled may be indicated through a MAC-CE signal. According to an embodiment, the first TCI state may not be disabled according to the above-described indication. That is, the TCI states disabled by the MAC-CE may be limited to the second TCI states.

According to various embodiments of the disclosure, the base station may indicate second TCI states to be enabled to the UE. The second TCI states to be enabled may be indicated through a MAC-CE signal. According to an embodiment, the first TCI state may not be enabled according to the above-described indication. That is, the TCI states enabled by the MAC-CE may be limited to the second TCI states. According to an embodiment, enabling a TCI state, as used herein, may mean that the UE may receive a PDSCH (or transmit a PUSCH) through the TCI state.

According to an embodiment, the UE may receive a MAC-CE through a PDSCH. The UE may transmit information regarding successful reception of the PDSCH to the base station. Successful reception may refer to "ACK" in the HARQ-ACK information. The UE may transmit the HARQ-ACK information to the base station through a PUCCH. The UE may apply disabling or enabling of the second TCI states indicated by the MAC-CE after a predetermined timepoint since the PUCCH transmission. According to an embodiment, the predetermined timepoint may refer to a timepoint at which disabling or enabling of TCI states is applied 3*N_subframe OFDM symbols after PUCCH transmission (or after the slot in which the PUCCH is transmitted) (or from the first slot after 3*N_subframe OFDM symbols). The UE may not apply disabling or enabling of second TCI states indicated by the MAC-CE until the above-described timepoint.

According to an embodiment, in case that PDSCH reception (PUSCH transmission) already scheduled before the above-described timepoint corresponds to the disabled second TCI state, the UE may not cancel the PDSCH reception (PUSCH transmission). For example, the UE may apply disabling or enabling of the second TCI states indicated by the MAC-CE only to the PDSCH reception (PUSCH transmission) scheduled after the above-described timepoint. The above-described scheduling may be applied through a PDCCH including DCI such that, if the PDCCH reception timepoint (for example, the first symbol or the last symbol) precedes the above-described timepoint, the UE may not apply the disabling or enabling of the second TCI states indicated by the MAC-CE. If the PDCCH reception timepoint (for example, the first symbol or the last symbol) comes after the above-described timepoint, the UE may apply the disabling or enabling of the second TCI states indicated by the MAC-CE.

According to an embodiment, in case that PDSCH reception (PUSCH transmission) already scheduled before the aforementioned timepoint corresponds to a disabled second TCI state, the UE may or may not cancel the PDSCH reception (PUSCH transmission) based on the processing time. The UE may not cancel PDSCH reception (or PUSCH transmission) within *X* ms or *X* OFDM symbols after a reference timepoint (e.g., the last symbol or slot of PUCCH transmission, or the predetermined timepoint described above). According to an embodiment, the UE may cancel the PDSCH reception (PUSCH transmission) after the reference timepoint. *X* may be the time required to cancel the PDSCH reception (PUSCH reception).

### <Method for Configuring Separate MIMO Parameter and Generating HARQ-ACK Codeword>

According to various embodiments of the disclosure, the UE may transmit hybrid automatic repeat request (HARQ)-acknowledgement (ACK) information of a PDSCH to the base station. In case that the maximum number of codewords configured for the UE is 2, the PDSCH includes two codewords, and the UE thus needs to transmit HARQ-ACK information corresponding to the two codewords to the base station. According to an embodiment, when the maximum number of codewords configured for the UE is 1, the PDSCH includes one codeword, and the UE thus needs to transmit HARQ-ACK information corresponding to one codeword to the base station.

According to various embodiments of the disclosure, the base station may configure different maximum numbers of codewords for different symbol types. For example, the maximum number of codewords configured for the downlink symbol may be 2, and the maximum number of codewords configured for the SBFD symbol may be 1. When the UE receives a PDSCH, the number of codewords included in the PDSCH may vary according to the type of the scheduled symbol. Therefore, the number of pieces of HARQ-ACK information that the UE needs to report to the base station may also differ.

According to an embodiment, the UE may report HARQ-ACK information to the base station, based on Type-1 HARQ-ACK codeword or Type-2 HARQ-ACK codeword. Type-1 HARQ-ACK codeword or Type-2 HARQ-ACK codeword needs to include not only HARQ-ACK information of a PDSCH successfully received by the UE but also HARQ-ACK information of a PDSCH scheduled by the base station but failed to be received by the UE. The HARQ-ACK information of the PDSCH scheduled by the base station but failed to be received by the UE may be configured as a negative ACK (NACK). However, the UE may fail to recognize the length of HARQ-ACK information of the PDSCH scheduled by the base station but failed to be received by the UE. This is because, as described above, the number of pieces of HARQ-ACK information reported by the base station is determined according to the maximum number of codewords.

In order to solve the above problem, when generating Type-1 HARQ-ACK codeword or Type-2 HARQ-ACK codeword, the UE may always assume that the number of code-words included in the PDSCH is the larger value between the maximum numbers of codewords configured for two symbol types. For example, if the maximum number of codewords is configured to be 1 for the UE for both symbol types, the UE may generate HARQ-ACK information by assuming that the PDSCH always includes one codeword. According to an embodiment, if the maximum number of codewords is configured to be 2 for the UE with regard to at least one of two symbol types, the UE may generate HARQ-ACK information under the assumption that the PDSCH includes two codewords. If the PDSCH actually received by the UE includes only one codeword, HARQ-ACK information regarding one codeword not included may be configured as NACK. According to an embodiment, the UE may generate HARQ-ACK information regarding two codewords by assuming that the PDSCH scheduled by the base station but failed to be received by the UE always includes two codewords.

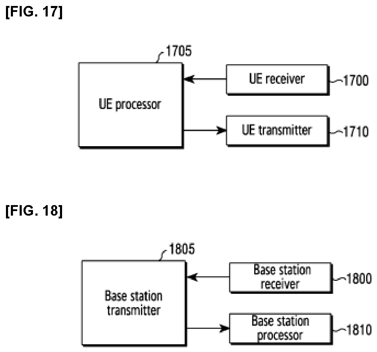

FIG. 17 illustrates a structure of a UE in a wireless communication system according to an embodiment of the disclosure.

Referring to FIG. 17, the UE may include a transceiver, which refers to a UE receiver 1700 and a UE transmitter 1710 as a whole, a memory (not illustrated), and a UE processor 1705 (or UE controller or processor). The UE transceiver 1700 and 1710, the memory, and the UE processor 1705 may operate according to the above-described communication methods of the UE. However, components of the UE are not limited to the above=-described example. For example, the UE may also include a larger or smaller number of components than the components described above. Furthermore, the transceiver, the memory, and the processor may be implemented in the form of a single chip.

The transceiver may transmit/receive signals with base stations. Here, the signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is merely an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for the operation of the UE. In addition, the memory may store control information or data included in signals transmitted/received by the UE. The memory may include a storage medium such as a ROM, a RAM, a hard disk, a CD-ROM, and a DVD, or a combination of storage media. In addition, the memory may include multiple memories.

In addition, the processor (or controller) may control a series of processes so that the UE can operate according to the above-described embodiments. For example, the processor may control the components of the UE to receive DCI configured in two layers so as to simultaneously receive multiple PDSCHs. The processor may include multiple processors, and the processor may perform the control operation of the components of the UE by executing programs stored in the memory.

FIG. 18 illustrates a structure of a base station in a wireless communication system according to an embodiment of the disclosure.

Referring to FIG. 18, the base station may include a transceiver, which refers to a base station receiver 1830 and a base station transmitter 1810 as a whole, a memory (not illustrated), and a base station processor 1805 (or base station controller or processor). The base station transceiver 1800 and 1810, the memory, and the base station processor 1805 may operate according to the above-described communication methods of the base station. However, components of the base station are not limited to the above-described example. For example, the base station may include a larger or smaller number of components than the components. described above. Furthermore, the transceiver, the memory, and the processor may be implemented in the form of a single chip.

The transceiver may transmit/receive signals with UEs. Here, the signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is merely an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for the operation of the base station. In addition, the memory may store control information or data included in signals transmitted/received by the base station. The memory may include a storage medium such as a ROM, a RAM, a hard disk, a CD-ROM, and a DVD, or a combination of storage media. In addition, the memory may include multiple memories.

The processor (or controller) may control a series of processes so that the base station can operate according to the above-described embodiments of the disclosure. For example, the processor may control each component of the base station in order to configure two-layer DCIs including allocation information of multiple PDSCHs and transmit the same. The processor may include multiple processors, and the processor may perform the control operation of the components of the base station by executing programs stored in the memory.

Methods disclosed in the claims or methods according to the embodiments described in the specification of the disclosure may be implemented by hardware, software, or a combination of hardware and software.

When implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memory including random access memory and flash memory, a read only memory (ROM), electrically erasable programmable read only memory (EEPROM), a magnetic disc storage device, a compact disc-ROM (CD-ROM), digital versatile discs (DVDs), or other type optical storage devices, or a magnetic cassette. Alternatively, the program may be stored in a memory configured as a combination of some or all of them. In addition, a plurality of such memories may be included.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a device for performing embodiments of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural, and therefore, either an element expressed in the plural may also include a single element or an element expressed in the singular may also include multiple elements

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. In addition, the above respective embodiments may be employed in combination, as necessary. As an example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps of each method are performed, and the order relationship between the steps may be changed or the steps may be performed in parallel.

In the drawings in which methods of the disclosure are described, the order of the description does not always correspond to the order in which steps are performed, and the order relationship between the steps may be changed or the steps may be performed in parallel.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

1. A user equipment (UE) in a wireless communication system, the UE comprising:
a transceiver; and
a controller coupled to the transceiver,
wherein the controller is configured to:
receive, from a base station, first information configuring a resource for a first symbol and second information configuring a second resource for a second symbol;
receive, from the base station, first downlink control information (DCI) including at least one of a first sounding reference signal resource indicator (SRI) for the first symbol or a second SRI for the second symbol; and
transmit, to the base station, a physical uplink shared channel (PUSCH) on at least one of the first symbol or the second symbol,
wherein the first SRI is associated with a first SRS resource before receiving the first DCI and a symbol type of the first symbol is identical to a symbol type of the first SRS resource, and
wherein the second SRI is associated with a second SRS resource before receiving the first DCI and a symbol type of the second symbol is identical to a symbol type of the second SRS resource.

2. The UE of claim 1,
wherein the symbol type of the first symbol is a subband full duplex (SBFD) symbol, and
wherein the symbol type of the second symbol is a non-SBFD symbol.

3. The UE of claim 1, wherein the first DCI further includes at least one of a first transmit precoding matrix indicator (TPMI) corresponding to the first SRS resource or a second TPMI corresponding to the second SRS resource.

4. The UE of claim 1, wherein the controller is further configured to:
receive, from the base station, second DCI including a codepoint associated with a first transmission configuration indicator (TCI) state for a third symbol and a second TCI state for a fourth symbol; and
receive, from the base station, a physical downlink shared channel (PDSCH) on at least one of the third symbol or the fourth symbol,
wherein a symbol type of the third symbol is an SBFD symbol, and
wherein a symbol type of the fourth symbol is a non-SBFD symbol.

5. A base station in a wireless communication system, the base station comprising:
a transceiver; and
a controller coupled to the transceiver,
wherein the controller is configured to:
transmit, to a user equipment (UE), first information configuring a resource for a first symbol and second information configuring a resource for a second symbol;
transmit, to the UE, first downlink control information (DCI) including at least one of a first sounding reference signal resource indicator (SRI) for the first symbol or a second SRI for the second symbol; and
receive, from the UE, a physical uplink shared channel (PUSCH) on at least one of the first symbol or the second symbol,
wherein the first SRI is associated with a first SRS resource before receiving the first DCI and a symbol type of the first symbol is identical to a symbol type of the first SRS resource, and
wherein the second SRI is associated with a second SRS resource before receiving the first DCI and a symbol type of the second symbol is identical to a symbol type of the second SRS resource.

6. The base station of claim 5,
wherein the symbol type of the first symbol is a subband full duplex (SBFD) symbol, and
wherein the symbol type of the second symbol is a non-SBFD symbol.

7. The base station of claim 5, wherein the first DCI further includes at least one of a first transmit precoding matrix indicator (TPMI) corresponding to the first SRS resource or a second TPMI corresponding to the second SRS resource.

8. The base station of claim 5, wherein the controller is further configured to:
transmit, to the UE, second DCI including a codepoint associated with a first transmission configuration indicator (TCI) state for a third symbol and a second TCI state for a fourth symbol; and
transmit, to the UE, a physical downlink shared channel (PDSCH) on at least one of the third symbol or the fourth symbol,
wherein a symbol type of the third symbol is an SBFD symbol, and
wherein a symbol type of the fourth symbol is a non-SBFD symbol.

9. A method performed by a user equipment (UE) in a wireless communication system, the method comprising:
receiving, from a base station, first information configuring a resource for a first symbol and second information configuring a resource for a second symbol;
receiving, from the base station, first downlink control information (DCI) including at least one of a first sounding reference signal resource indicator (SRI) for the first symbol or a second SRI for the second symbol; and
transmitting, to the base station, a physical uplink shared channel (PUSCH) on at least one of the first symbol or the second symbol,
wherein the first SRI is associated with a first SRS resource before receiving the first DCI and a symbol type of the first symbol is identical to a symbol type of the first SRS resource, and
wherein the second SRI is associated with a second SRS resource before receiving the first DCI and a symbol type of the second symbol is identical to a symbol type of the second SRS resource.

10. The method of claim 9,
wherein the symbol type of the first symbol is a subband full duplex (SBFD) symbol, and
wherein the symbol type of the second symbol is a non-SBFD symbol.

11. The method of claim 9, wherein the first DCI further includes at least one of a first transmit precoding matrix indicator (TPMI) corresponding to the first SRS resource or a second TPMI corresponding to the second SRS resource.

12. The method of claim 9, further comprising:
receiving, from the base station, second DCI including a codepoint associated with a first transmission configuration indicator (TCI) state for a third symbol and a second TCI state for a fourth symbol; and
receiving, from the base station, a physical downlink shared channel (PDSCH) on at least one of the third symbol or the fourth symbol,
wherein a symbol type of the third symbol is an SBFD symbol, and
wherein a symbol type of the fourth symbol is a non-SBFD symbol.

13. A method performed by a base station in a wireless communication system, the method comprising:
transmitting, to a user equipment (UE), first information configuring a resource for a first symbol and second information configuring a resource for a second symbol;
transmitting, to the UE, first downlink control information (DCI) including at least one of a first sounding reference signal resource indicator (SRI) for the first symbol or a second SRI for the second symbol; and
receiving, from the UE, a physical uplink shared channel (PUSCH) on at least one of the first symbol or the second symbol,
wherein the first SRI is associated with a first SRS resource before receiving the first DCI and a symbol type of the first symbol is identical to a symbol type of the first SRS resource, and
wherein the second SRI is associated with a second SRS resource before receiving the first DCI and a symbol type of the second symbol is identical to a symbol type of the second SRS resource.

14. The method of claim 13,
wherein the symbol type of the first symbol is a subband full duplex (SBFD) symbol, and
wherein the symbol type of the second symbol is a non-SBFD symbol.

15. The method of claim 13, wherein the first DCI further includes at least one of a first transmit precoding matrix indicator (TPMI) corresponding to the first SRS resource or a second TPMI corresponding to the second SRS resource.
